# EUROPEAN PATENT APPLICATION

(11) **EP 4 653 190 A1**
(43) Date of publication of application: **26.11.2025**
(21) Application number: 25177850.2
(22) Date of filing: 21.05.2025
(51) Int. Cl.: B32B 27/10, B32B 27/32, D21H 19/82, D21H 19/84, D21H 27/10, D21H 19/08, D21H 19/40, D21H 19/58, D21H 21/14, D21H 27/30, D21H 21/16, B65D 65/40, B32B 7/12, B32B 27/08

(54) **LAMINATED PACKAGING MATERIAL AND PACKAGING CONTAINERS MANUFACTURED THEREFROM**

(30) Priority: 22.05.2024 EP 24177457
(71) Applicant: Tetra Laval Holdings & Finance S.A., 1009 Pully (CH)
(72) Inventor: Toft, Nils, 221 86 Lund (SE); Berlin, Mikael, 221 86 Lund (SE); Hallquist, Jakob, 221 86 Lund (SE)
(74) Representative: Tetra Pak Patent Attorneys

(57) **Abstract**

The present invention relates to a laminated packaging material (10; 20) comprising a bulk layer of carton or paperboard (11; 21), a first outermost protective material layer (12; 22), a first gas barrier coating (14; 24), applied on a first, inner side of the bulk layer (11; 21) and a metallized polymer film (16; 26) laminated to the gas-barrier coated bulk layer. The invention further relates to a method for manufacturing of the laminated packaging material and to packaging containers (50a; 50b; 50c; 50d) made therefrom.

## Description

### Technical field

The present invention relates to a laminated packaging material, for aseptic packaging of liquid food products, such as milk or dairy products, and to a method of manufacturing the laminated packaging material, as well as to a packaging container manufactured from the laminate packaging material.

### Background of the invention

Packaging containers of the single use, disposable type for oxygen-sensitive and liquid or viscous foods are often produced from a packaging laminate based on paperboard or carton. One such commonly seen packaging container is marketed under the trademark Tetra Brik Aseptic^{®} and is principally employed for aseptic packaging of liquid foods such as milk, fruit juices etc, sold for long term ambient, aseptic storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by continuously reforming a web of the laminated packaging material into a tube by both of the longitudinal edges of the web being united to each other in an overlap joint by welding together the inner- and outermost heat sealable thermoplastic polymer layers. The tube is continuously filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are efficiently reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient packaging material, at its level of performance, available on the market today.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there are activities striving towards developing pre-manufactured films or sheets having high and multiple barrier functionalities, which may directly replace the aluminium-foil barrier material in the conventional laminated packaging material.

There are various aqueous dispersion coating processes and vapour deposition coating processes and material recipes for barrier coatings of substrate films or sheets, but there is generally a need for more cost-efficient barrier materials of the "non-foil" type, i.e. non-aluminium-foil materials, having high barrier properties for use in packaging laminates for liquid food packaging, in particular towards gases, such as oxygen gas, but also e.g. towards slow migration of water vapour barrier.

An earlier patent publication WO2009/112255A1 discloses a non-aluminium-foil packaging material comprising a laminate comprising and combining a barrier-coated paperboard with a barrier vapour-deposition coated polymer film.

The later patent publication EP4008548A1 discloses that a base coating may improve the quality of a subsequent gas barrier dispersion coating and a metallisation coating on similar paper substrates.

There remains, however, a need for further improved non-foil laminates over those of the prior art. **It** is important that laminated packaging materials containing non-foil barrier layers and coatings function well and are reliable under severe circumstances, thus enduring mechanical strain and tough climate conditions, as well as the packaging processes and distribution and storage handling. There is also an increased need for lowering material costs while also the properties regarding recyclability and environmental sustainability of the materials used for laminated packaging materials are improved.

### Description of the invention

**It** is, accordingly, an object of the present invention to provide industrially viable alternative laminated packaging materials to the traditional packaging laminates relying on an aluminium foil barrier, i.e. to provide affordable and reliable non-foil packaging laminates, manufactured at reduced carbon emission thanks to omitting the inclusion of the relatively thick aluminium metal layer.

**It** is also an object of the invention to provide laminated packaging materials having good repulpability and recyclability, to fulfil the needs of future sustainable laminated packaging materials while also being cost effective, in particular for low-cost, every-day used liquid food products, such as ambient, aseptic milk packages.

**It** is a further general object of the invention to provide such laminated packaging materials, which accordingly do not contain aluminium foil but still have good gas barrier and further barrier properties, to be suitable for long-term, aseptic, heat sealable packaging.

These objects are thus attainable according to the present invention by the laminated packaging material, the method of manufacturing the laminated packaging material, and packaging containers comprising it, as defined in the appended claims.

According to a first aspect of the invention, there is provided a laminated packaging material for aseptic packaging of liquid food products, such as milk or dairy products, comprising as layers of a layer sequence, as viewed from outside to inside of a packaging container formed from the laminated packaging material,
- a first outermost, protective material layer,
- a bulk layer of paper, paperboard or other cellulose-based material,
- a flexible and equalizing base coating, comprising from 25 to 96 weight-% of inorganic particles and from 4 to 75 wt-% of a polymer binder, per dry weight, applied directly on and adjacent to a first, inner side of the bulk layer by means of aqueous dispersion coating,
- a first gas barrier coating, applied onto the flexible and equalizing base coating, by means of dispersion or solution coating of an aqueous oxygen barrier composition and subsequent drying by hot air to evaporate the water from the gas barrier coating,
- at least one interjacent bonding layer comprising at least one bonding polymer,
- a metallized polymer film, which comprises a vapour deposited metallization coating on a polymer film substrate, the metallized polymer film being laminated to the inner side of the thus barrier-coated bulk layer by means of the at least one interjacent bonding layer, wherein the polymer film substrate is, or comprises, a first innermost liquid tight, heat sealable material layer of the laminated packaging material, and optionally
- a further, second innermost liquid tight, heat sealable material layer or multilayer portion applied by melt (co-) extrusion coating onto the inner side of the metallized polymer film and comprising one or more (co-)polymer(s) based on polyethylene, such as selected from LDPE, mLLDPE and LLDPE and any blends of two or more thereof,
wherein
the polymer film substrate of the metallized polymer film is a pre-manufactured, load-bearing, polyethylene film being a cast and biaxially oriented film comprising from 60 to 100 % of linear-low density polyethylene (LLDPE), preferably 80 to 100 % LLDPE, more preferably 90 to 100 % LLDPE, the pre-manufactured polyethylene film further having the properties of
- a total thickness from 15 to 25 µm,
- an Elastic Modulus of at least 400 MPa in the MD, and of at least 500 MPa in the CD, as measured by ASTM D 882-02 (2018) with an initial strain rate of 0.1 mm/(mm*min),
- a tensile strength above 40 MPa, preferably above 50 MPa in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 deg C as determined by ASTM F1921 (2018) at 2N,
- a maximum hot-tack force above 7 N, as measured by ASTM F1921 (2018), and
- a puncture resistance of 10 N or higher, as measured according to ASTM F1306-16 (2016) at a crosshead speed of 500 mm/min.

The aluminium content in a metallized film is only a few weight-% of the amount of aluminium needed in a conventionally used 6 µm (micron) thick aluminium foil. A metallized polymer film may exhibit excellent water vapor barrier and good oxygen barrier properties at a thickness in the order of tenths or hundreds of nanometers only, which constitutes only a negligible proportion of metal altogether in a laminated packaging material. Such materials are thus more sustainable in terms of emissions of CO₂, as well as in terms of recyclability of the materials involved.

The metallization coating may be from 5 to 200 nm, such as from 10 to 100 nm, such as from 10 to 80 nm, such as more preferably from 10 to 50 nm. The amount of the metallization coating should be kept as low as possible, for the purpose of maintaining a good water vapour barrier rather than for providing high oxygen barrier properties. In interaction with the first gas barrier coating onto the bulk layer, good total oxygen barrier properties will be obtained from the combination of the laminated barrier coatings.

The metallized polymer film substrate is, or comprises, a first innermost liquid tight, heat sealable material layer or multilayer portion of the laminated packaging material, which is to be in direct contact with a filled food product in a packaging container formed from the laminated packaging material. In the case when the metallised polymer film substrate entirely forms the innermost layer, the non-metallized surface of the film will thus form the inside surface in a packaging container and be in direct contact with the filled product. The properties of the metallized polymer film are well adapted to provide heat sealability to the laminated packaging material. An advantage of the laminated packaging material of the invention is that good heat seal properties as well as package integrity of filled and heat sealed packages can be achieved, by less material, as the polymer film substrate is very thin in relation to its good properties. Suitable packaging containers that are suitably produced from such a laminated packaging material are e.g. the smaller package sizes, i.e. so-called portion packs.

In another embodiment, a further, second innermost liquid tight, heat sealable material layer or multilayer portion is applied by melt (co-)extrusion coating onto the non-laminated, inner side of the metallized polymer film, to instead be in direct contact with a filled food product in a packaging container formed from the laminated packaging material. It preferably comprises a thermoplastic polymer, such as a polyolefin. More preferably, it comprises one or more (co-)polymer(s) based on polyethylene, such as selected from LDPE, mLLDPE and LLDPE and any blends of two or more thereof. Such laminated packaging materials are suitable for more demanding package formats, such as larger size packages, e.g. of 1 litre volume and higher, fold-formed packages with intricate geometries in the folding features and for larger pouch packages that may need to endure severe circumstances during distribution and handling.

If such an optional, further, second, innermost, liquid tight and heat sealable layer of a thermoplastic polymer has been applied by melt extrusion coating, it will not nearly be as oriented as the biaxially oriented pre-manufactured film, and its additional presence will not alter the openability properties of the laminated material significantly. It will enable further robustness in heat sealing of packaging container formats that require it.

An optional, further, second, innermost liquid tight, heat sealable layer may thus be melt extrusion coated onto the inside of the metallized polymer. The thermoplastic polymer of the second innermost liquid tight, heat sealable layer is preferably selected from a group consisting of lower density polyethylene polymers and blends of such lower density polyethylenes, such as LDPE, LLDPE, mLLDPE and any blends of two or more thereof. Preferably, the second innermost liquid tight, heat sealable layer is a blend of mLLDPE and LDPE, for optimal heat sealing properties and heat seal integrity, such as a blend of from 10 to 90 weight-% of mLLDPE and from 10 to 90 weight-% of LDPE, such as a blend of from 30 to 80 weight-% of mLLDPE and from 20 to 70 weight-% of LDPE, such as a blend of from 50 to 90 weight-% of mLLDPE and from 10 to 50 weight-% of LDPE, such as a blend of from 60 to 80 weight-% of mLLDPE and from 20 to 40 weight-% of LDPE. The melting temperature of the second innermost heat sealable layer is lower than that of the core of the metallized polymer film substrate.

A suitable bulk layer for the laminated packaging material of the first aspect, for the packaging containers of the second aspect and for the method of manufacturing the laminated packaging material of the third aspect, has a thickness from 100 to 600 µm, to provide sufficient bending stiffness and dimensional stability. It may suitable have a surface weight from 100 to 500 g/m².

The metallized polymer film substrate as defined in the first aspect and a second, innermost layer may both contribute, to provide a good, final heat seal during the heat sealing process. The amount of heat sealable and liquid tight polymers on the inside of the laminated packaging material would still be lower than if the metallized polymer film had not been used, and the good properties would still not be achieved.

The optional, second innermost liquid tight, heat sealable layer is suitably applied at a coat weight from 12 to 20 g/m², such as from 13 to 19 g/m².

Preferably, the metallized polymer film substrate, being a pre-manufactured, load-bearing, cast and biaxially oriented polyethylene film, has a core layer comprising more than 60 weight-% of m-LLDPE, a first "skin" layer on one side of the core layer, also comprising m-LLDPE and being further adapted for heat sealing of the film than the polyethylenes of the core layer, and optionally the pre-manufactured polyethylene film has a second skin layer on the other side of the core layer. The LLDPE of the heat sealable skin layer may be further adapted for improving the heat sealability of the film by having a higher melt flow rate (i.e. melt index) and a lower density than the LLDPE of the core layer.

The major LLDPE polymer of the pre-manufactured polyethylene film may thus be a linear low density polyethylene manufactured by metallocene-type of catalyst polymerization technology (constrained-geometry, single-site), m-LLDPE. Whilst m-LLDPE is preferred for use in the core layer, other layers such as the skin layers may suitably comprise Ziegler-Natta LLDPE.

The pre-manufactured polyethylene film is a polyethylene-based film, but may contain minor amounts of additional polyolefin compounds, such as copolymers of ethylene and propylene for adjustment of various film properties.

The LLDPE of a cast film, such as of the core layer of a cast film, may have a melt flow ratio/ melt flow index (MFR/ MFI) of from 2 to 5 g/10min at 2.16 kg, 190 °C, as measured according to ASTM D1238 or ISO 1133. The major LLDPE base for a blown film, on the other hand, has a melt flow ratio of 1 or lower, to fulfil requirements for a film blowing manufacturing process. This seems to make a big difference in properties for suitability as a polymer in a pre-manufactured, heat-sealable film for the innermost layer, thus rendering cast, bi-axially oriented films more suitable for such heat sealable films. This may also be reflected by the fact that blown films normally require that further extrusion-coated polyethylene layers are applied innermost, i.e. on the inside of a blown film, to be heat sealed and to be in contact with a filled food product.

Examples of suitable LLDPE for the core layer are those with melting indices of 1 to 4 g/10 min (measured at 190 °C and 2.13 kg conditions), densities from 0.915 or lower to 0.930 g/cm³ , and melting peaks within a range from of 90 to 138° C.

The LLDPE of the first (sealant-side) skin layer and tie layer may have a higher melt index and a lower density than the LLDPE of the core layer and/or the optional second skin layer and tie layers, in order to enhance the heat-sealing properties of the sealant side layers and to avoid visual distortions and rheological defects caused by the sealing.

By further adapting the heat sealable skin to further preserve and provide the film to exhibit a low seal initiation temperature and a high hot-tack force, the sealability of the film may be optimised. Because the film blowing process and type of polymers used therefor, result in film layers varying to quite some extent in thickness within the plane extension of the film, blown films need to be made rather thick for sufficient and reliant heat sealability properties. Since the conformity of film thickness is better in bioriented cast films, such a film, including the heat sealable skin layer, may also be made thinner, such as by increased orientation of the layers of the film. Thus, the heat sealable portion or layer of the film only needs to be a thin, so-called "skin" layer of a thickness from 0.5 to 3 µm, such as from 1 to 3 µm, and the total thickness of the film may be as low as from 16 to 20 µm.

Preferably, the pre-manufactured polyethylene film has a stretching ratio from 5 to 7 in the machine direction, MD, and from 7 to 10 in the cross direction, CD. The degree of orientation, i.e. stretching of the polymers in the film is thus very high, in comparison to blown films in particular, but also in comparison to many cast, biaxially oriented films, and unusually high in the CD vs the degree of orientation in the MD. Such degrees of stretching are attainable in a tenter-frame equipment. The high degree of stretching is reflected in the properties of the film, e.g. by the significantly higher tensile strength and the lower elongation at break in the CD. Such films may also be produced, for example, on a bi-orientation line, such as that described in United States Patent No. 8080294.

The thickness of the substrate polymer film may suitably be from 16 to 25 µm, such as from 18 to 23 µm.

It is important to the openability of a laminated packaging material that the bi-oriented film is not too thick while it still can provide good mechanical properties, as listed above.

In an embodiment, the core layer of the pre-manufactured polyethylene film has a thickness from 10 to 18 µm, such as from 10 to 16 µm, such as from 10 to 14 µm.

Preferably, the core layer comprises from 80 to 100 weight-% of LLDPE polymer, such as m-LLDPE, more preferably from 90 to 100 weight-%, such as above 90 weight-% LLDPE, such as preferably m-LLDPE.

In a further embodiment, the thickness of the first skin layer, and of the optional second skin layer, is from 0.5 to 3, such as from 1 to 3, such as from 2 to 3 µm. Preferably, the film has one skin layer on each side of the core layer, for optimal stability and mechanical symmetry of the film, thus avoiding phenomena such as curling of the film etc. The polymer of the optional skin layer need not be especially adapted for any property but should preferably match the mechanical properties and the melt processability properties of the core and the heat sealable skin layer. It may comprise an LDPE polymer, and optionally LLDPE polymer(s) of the same or different kind as comprised in the core layer. The surface of the optional skin layer may be adapted or treated to optimise adhesive or frictional properties, for example.

The pre-manufactured polyethylene film may comprise further thin layers to tighter bond the skin layer(s) to the core layer, so-called tie layers, of the same or different types of polymers as used in the core layer. The thickness of the tie layer is typically in the range of 0.50 to 25 µm.

The pre-manufactured polyethylene film may further comprise additives or other polymer compounds, such as anti-block agents (e.g. zeolite or silicate) and anti-slip agents (e.g. erucamide, silicone gum or PMMA) and hydrocarbon resins to further improve film qualities and processability. The sealant-side skin layer may comprise a greater concentration of anti-block agents than other layers.

In a different embodiment, the optional second skin layer may comprise an adhesive polymer, such as an ethylene-based polymer having functional carboxylic groups, such as a copolymer of ethylene with (meth)acrylic acid or the like, for improved adhesion and bonding to an adjacent, subsequently laminated or coated layer. With such a film, heat-pressure lamination to a metal foil layer may be possible, without applying any bonding material between the surfaces of the skin layer and the metal layer.

In an embodiment, the pre-manufactured polyethylene film has a seal initiation temperature, SIT, from 80 to 95 deg C, such as from 80 to 90 deg C, as determined by ASTM F1921 (2018) at 2N. This is at least partly achieved by an adapted, heat sealable skin layer, directed towards the inside of a packaging container made from the laminated packaging material, intended to be in contact with the filled product. The heat sealable skin layer comprises a polymer providing the important heat sealability properties of a high hot tack force and a low seal initiation temperature, attributable for example to m-LLDPE types of polyethylene.

In a further embodiment, the pre-manufactured polyethylene film has a maximum hot-tack seal strength, above 8 N, as measured by ASTM F1921 (2018). The combination of a low seal initiation temperature and a high maximum hot tack force at low temperature ensures a rapid and immediate sealing operation, allowing for fast filling machines and reliable seal strength in the filled packaging containers.

In yet a further embodiment, the pre-manufactured polyethylene film for the metallized polymer film substrate has a puncture resistance of 10 N or higher, as measured according to ASTM F1306-16 (2016) at a crosshead speed of 500 mm/min, and exhibits an elongation at puncture (i.e. at maximum load) lower than 10 mm. This property is important for the ability of the film to withstand penetration and rupture of the film by rapid impact of a protrusion onto the surface, i.e. the resistance of the film to "pointed impact". This may be a useful property in filled packages that are relying on a paper-based oxygen barrier material or other less flexible materials, or in packages subject to sudden impact or forces. The high puncture resistance value of 10 N or higher ensures that such impact or force needs to be quite high before any damage to the film would occur.

Suitable pre-manufactured films are disclosed in US2018/361722A of Jindal Films Americas LLC. A preferred metallized polymer film as described is SealTOUGH 23XM344, manufactured by Jindal Films. Minor adjustments to amounts of additives may be made e.g. for food safety.

The measurements of E-modulus were performed with a sample specimen length of 100 mm. The strain rate was adjusted to this specimen length by using a grip separation speed of 10 mm/min, as according to ASTM D 882-18. Accordingly, the initial strain rate was 0.1 mm/(mm*min).

Thickness measurements were performed in accordance with ASTM E252-06.

The tensile strength was measured according to ASTM D638M-14 (2017) at a 200 mm/min crosshead rate.

The elongation at break was measured by ASTM D638M-14 (2017) at 200 mm/min crosshead rate.

The seal initiation temperature, SIT, from 80 to 100 deg C was determined by ASTM F1921 (2018) at 2N.

The maximum hot tack force was measured by ASTM F1921 (2018).

The puncture resistance was measured according to ASTM F1306-16 (2016) at a crosshead speed of 500 mm/min.

The flexible and equalizing base coating may comprise from 30 to 96 weight-%, such as from 40 to 96 weight-%, such as from 50 to 96 weight-%, such as from 55 to 96 weight-%, such as from 60 to 96 weight-%, such as from 65 to 96 weight-%, such as from 70 to 96 weight-%, of the inorganic particles and from 4 to 70 weight-%, such as from 4 to 60 weight-%, such as from 4 to 50 weight-% such as from 4 to 45 weight-%, such as from 4 to 40 weight-%, such as from 4 to 35 weight-%, such as from 4 to 30 weight-%, of a polymer binder and further additives, based on dry weight.

The flexible and equilizing base coating may be applied by means of aqueous dispersion coating at an amount of from 5 to 25 g/m², such as from 7 to 22 g/m², such as from 7 to 20 g/m², such as from 7 to 19 g/m², such as from 10 to 20 g/m², such as from 10 to 19 g/m², such as from 10 to 15 g/m², dry weight.

The polymer binder of the flexible and equalizing base coating may be an aqueous emulsion binder, wherein the polymer has a glass transition temperature from - 50 deg Celsius to +100 degrees Celsius, as determinable by DMA analysis, or DSC. This may provides some flexibility to the base coating by the polymer having some flexibility property at ambient temperature or normal use temperatures.

The polymer binder of the flexible and equalizing base coating may be an aqueous emulsion binder, such as selected from the group consisting of aqueous emulsions of acrylic or methacrylic homo- or co-polymers, such as styrene-acrylate latex, vinyl acrylic copolymer latex or vinyl acetate acrylate copolymer latex, and of styrene-butadiene copolymers, such as styrene-butadiene latex, and of biobased emulsion binders, such as modified starch latex, and of vinyl alcohol polymers, such as polyvinyl alcohol, PVOH, or ethylene vinyl alcohol, EVOH, butyl vinyl alcohol, BVOH, and of other modified starches or starch derivatives.

The first gas barrier coating is a dispersion coated layer of an aqueous oxygen gas barrier composition, i.e. applied by means of aqueous dispersion or solution coating and subsequent heat evaporation drying.

The aqueous oxygen barrier composition of the first gas barrier coating may comprise a polymer selected from the group consisting of vinyl alcohol polymers and copolymers, such as polyvinyl alcohol, PVOH, and ethylene vinyl alcohol, EVOH, starch, starch derivatives, xylan, xylan derivatives, nanofibrillar/ microfibrillar cellulose, NFC/ MFC, nanocrystalline cellulose, NCC, and blends of two or more thereof.

In an embodiment, the aqueous oxygen barrier composition of the first gas barrier coating may comprise a polymer selected from the group consisting of starch and vinyl alcohol polymers and copolymers, such as from the group consisting of polyvinyl alcohol, PVOH, ethylene vinyl alcohol, EVOH and starch.

In a further embodiment, the aqueous oxygen gas barrier composition of the first gas barrier coating comprises a polymer selected from the group consisting of vinyl alcohol polymers and copolymers, such as a polymer selected from the group consisting of polyvinyl alcohol, PVOH, and ethylene vinyl alcohol, EVOH.

In yet a further embodiment, serving to manufacture laminated packaging materials comprising essentially only materials based on non-fossil raw materials, the aqueous oxygen gas barrier composition of the first gas barrier coating comprises essentially polysaccharide-based polymers, such as a polymer selected from the group consisting of starch, starch derivatives, xylan, xylan derivatives, nanofibrillar/ microfibrillar cellulose, NFC/ MFC, nanocrystalline cellulose, NCC, and blends of two or more thereof.

The first gas barrier coating may be applied as a single coating, or more advantageously as two or more consecutively applied and dried coatings, by means of aqueous dispersion or solution coating to a total grammage from 0.5 to 4 g/m², such as from 0.5 to 3 g/m², such as from 0.5 to 2 g/m² dry weight. Lower grammages are insufficient for providing a gas barrier and higher grammages normally make the coatings more brittle and prone to cracking, such as upon fold-forming of the barrier-coated paperboard and the laminated packaging material.

The laminated packaging material may have a bulk layer being a conventional liquid paperboard having a printable coating comprising inorganic particles or pigments applied on the outside to receive a printed decorative pattern, often in every-day language denoted "clay-coat". It may be further coated on its opposite, inner side, with a flexible, equalizing base coating, to act in synergy together with subsequently applied gas barrier coatings. The flexible, equalizing base coating may be a similar coating to the printable pigment coating applied on the outside. The flexible and equalizing base coating may be applied by the paperboard supplier at the paper mill, or later in a separate coating step, preceding further converting and lamination operations.

The first, outermost protective material layer may be a thin coating of a transparent protective material comprising a polymer, such as a wax, or a lacquer or a polymer, such as a termoplastic polymer which may thus also be heat sealable. It may advantageously be a relatively thinly applied conventional, heat sealable and liquid tight polyolefin-based polymer, such as a polyethylene, such as LDPE, or such as an ethylen-acrylic acid copolymer, EAA. It may be applied as a thin, protective coating, to later be complemented with additional polymer at locations where heat sealing is required, such as where folded corner flaps need to be attached to the panels of a fold-formed cuboid packaging container. The first, outermost protective material layer may be applied by melt extrusion coating of a thermoplastic polymer at a coat weight from 6 to 10 g/m², such as at from 7 to 9 g/m². Such a thinner, outermost protective coating of a thermoplastic polymer may promote good repulpability in recycling for recovery of a clean fibre fraction in short repulping time, without fragmenting the polymer layer into too small pieces. Accordingly, the thin polymer layer may also be recycled together with the rest of the polymer fractions from the laminate. When a polyethylene-based polymer is used, it contributes to a purer recycling stream also of polyethylene.

In a further embodiment, the laminated packaging material has a bulk layer being a conventional liquid paperboard, which has the flexible and equalizing base coating on its inner side, and has a separate printable substrate paper laminated to the opposite, outer, not base-coated side of the bulk layer, for the application of a printed décorative pattern onto the printable substrate layer, and for further application of the first, outermost protective material layer. The outer side of the bulk layer may be bonded to the printable substrate paper by wet lamination, i.e. by an intermediate bonding layer comprising an aqueous composition of a polymer binder selected from the group consisting of acrylic polymers and copolymers, starch, cellulose and polysaccharide derivatives, polymers and copolymers of vinyl acetate and/or vinyl alcohol. Such an intermediate bonding layer may be applied at low amounts, such as at from 0.5 to 5 g/m², dry weight, thus contributing further to a generally more sustainable and resource-lean packaging material. Alternatively, the interjacent bonding layer may be applied by melt extrusion lamination of a thermoplastic polymer at a coat weight from 6 to 10 g/m², such as from 7 to 9 g/m².

The flexible and equalizing base coating may thus be a so-called clay-coat or pigment coating, and has the purpose to provide a smooth, dense and flexible surface applied onto the fibrous cellulose substrate, which acts to provide a flexible and mechanically equalizing base and an optimal surface for coating with further gas barrier layers, and to altogether provide good oxygen barrier in a packaging container, i.e. also after fold-forming and heat sealing a laminated packaging material comprising the base-coated and barrier-coated paperboard into a packaging container. It seems that the flexibility of the polymer binder and the equalizing or distributional properties of the mineral-filled or mineral-comprising coating supports the fold forming such that any tensions, defects or wrinkles formed upon folding are distributed within the material to be minimized around the folded areas of the material.

Furthermore, the flexible and equalizing base coating may act as a steam-resistant barrier to sudden expansion of air pockets or inclusions of moisture-containing air within the fibre network of the paperboard substrate. The base coating may thus protect the subsequently applied gas barrier coating(s) from mechanical abuse as well as from steam blistering upon exposure to heat, such as during fold-forming and heat sealing. On the other hand, the mineral-filled base coating may allow the slow migration of water vapour through the cross-direction or z-direction (i.e. out of the plane direction) of the laminated structure, such that any moisture from the liquid food product, filled into a packaging container made from the material, may pass the usually moisture-sensitive gas barrier material of the first gas barrier coating applied adjacent, onto the base coating and next adjacent to the paperboard. Thus, also in this manner, the base coating is equalizing any water vapour that may accidentally enter the interior of the laminate from the outside or the inside, or via the thicker and bulkier, moisture-absorbing cellulose-based bulk layer. Previous research has shown that it is not a good idea to encapsulate a moisture-sensitive layer of oxygen gas barrier materials between adjacent layers being water vapour barriers. This accelerates the gathering of moisture within the oxygen gas barrier layer, such that its barrier properties rapidly deteriorate and function no longer.

The inorganic particles or filler material used in the base coating may comprise various inorganic particles, such as clay minerals, silica particles, talcum and calcium carbonate. The thus dispersion-coated and dried layer of such a base coating may act as a barrier to migrating small molecules, such as water vapour, but may also act more efficiently as a load-bearing barrier to resist sudden expansion of water vapour, i.e. steam blisters, bursting towards the layer of the flexible and equalizing base coating from the adjacent substrate layer of fibrous cellulose.

In an embodiment, the inorganic particles comprise laminar silicate particles, which may contribute further to barrier properties in the material, by the creation of overlapping mineral flakes or lamellae, thus preventing migration of small molecules through the material. Such laminar inorganic particles may be selected from clays, such as kaolin clay or bentonite clays, silicates and talcum particles.

On the other hand, more round, globe-shaped particles may contribute better to a dense surface of the base coating, thus acquiring a lower surface porosity. A lower surface porosity efficiently promotes the quality and performance of an improved subsequently applied oxygen gas barrier coating.

The flexible and equalizing base coating composition may be an aqueous composition comprising from 10 to 20 weight-% of a polymer binder and from 80 to 90 weight-% of inorganic particles, dry weight.

In a preferred embodiment, the free, uncoated surface of the flexible and a equalizing base coating on the base-coated fibrous cellulose substrate obtained from the third step, has a surface roughness below 3 µm, such as below 2.5 µm, such as 2 µm or lower, such as 1.5 µm or lower, such as 1.2 µm or lower, such as 1.0 µm or lower, as measured according to ISO 8791-4 (PPS). Such level of smoothness, or low level of roughness, is improving the film formation of subsequently applied gas barrier coatings, thus providing as high gas barrier as possible.

The free, uncoated surface of the flexible and equalizing base coating applied on the bulk layer, as obtained from the first step may also have a low surface porosity. A low surface porosity further improves the film formation of subsequently applied gas barrier coatings, in that no or very low amounts of the oxygen gas barrier composition liquid is absorbed into the base coating at the surface of the paperboard bulk layer.

If the base coating is smooth and dense, gas barrier qualities of the paper substrate itself or of the base coating are not needed, and that the amount of coated first oxygen gas barrier coating can remain the same or may even be reduced. The resulting gas barrier properties in a packaging laminate will thus be very good, if such a flexible and equalizing base coating is used, although it does not contribute with significant gas barrier properties itself, i.e. the oxygen gas barrier properties are not inherent to the material(s) of the flexible and equalizing base coating. The resulting oxygen gas barrier in a fold-formed, filled and heat sealed packaging container, will also be ensured thanks to the base-coating being flexible such that upon fold forming and heat sealing, good and tight seals of the filled containers are ensured, supporting the integrity of the packaging containers and without jeopardizing the integrity of the first gas barrier coating layer(s).

The base coating composition may provide a flexible foundation as well as to provide an even, dense, compatible base coating surface to receive any further gas barrier coating. The material selected for the flexible and equalizing base coating does not need to contribute with inherent gas barrier properties, however.

After the dispersion coating and drying of the aqueous flexible and equalizing base coating, the coated surface of the base coated bulk layer may be smoothened and compacted, such as by soft calendering, to obtain the optimal surface properties, i.e. smoothness and low surface porosity, to receive further, thin coatings of gas barrier materials.

The free, dried but uncoated surface of the flexible and equalizing base coating was measured after soft calendering to have a surface roughness below 150 ml/min Bendtsen, such as below 100 ml/min Bendtsen, such as below 80 ml/min Bendtsen, such as below 50 ml/min Bendtsen. The smoother the surface of the flexible and equalizing base coating is, the better quality may be obtained in the subsequently dispersion coated and dried layer of the first gas barrier coating.

Preferably, the surface roughness may be very low and can be measured to exhibit values below 3 µm, such as below 2.5 µm, such as below 2 µm, such as 1.5 µm or lower, such as 1.2 µm or lower, such as 1.0 µm or lower, as measured according to ISO 8791-4 (PPS).

The base-coated bulk layer further coated with a first gas barrier coating being dispersion coated, may also have a PPS surface roughness lower than 2.5 µm, such as lower than 2.2 µm, such as lower than 2.0 µm, such as 1.8 µm or below, as measured according to TAPPI 555 om-15, being the same as ISO 8791-44.

A lower surface roughness provides for a perfect interface to subsequently applied adjacent layers and coatings, with a reduced number of imperfections such as pinholes, and unevenness in a coating layer. Consequently, the gas barrier coating or any further coating layer may be applied at a higher quality, or at a lower thickness, or both. For a same coating thickness of a gas barrier coating, better oxygen barrier properties are thus obtained in the coating itself.

The flexibility of the flexible and equalizing base coating seems to reduce the tendency of the material to form cracks in the paper and thereby also reduces the tendency to formation of cracks in the gas barrier coatings, thanks to a re-distribution of stress and strain over a larger surface area, e.g. during folding operations. It is believed that the inherent flexibility of the flexible and equalizing base coating supports any subsequently applied, less flexible, barrier coatings, to stay coherent as well as adherent upon folding of the barrier-coated substrate, i.e. the bulk layer of paperboard or carton.

The bulk layer may further have a second flexible and equalizing base coating on its opposite, outer side, which may be of the same type as the flexible and equalizing base coating on the first side of the bulk layer. The second, flexible and equalizing base coating may then be also a printable coating for the printed decorative pattern visible on the outside of the packaging container, or act as a base coating for a further, subsequently applied coating.

By the application of a base coating of a flexible and equalizing material, the paperboard will also be more resilient to creasing operations, such that the gas barrier coatings may be kept better intact with less damage, both during creasing and during folding along the formed crease lines.

It has been seen that the combination of a flexible and equalizing base coating and gas barrier coating(s), as of the present invention, may improve the gas barrier properties of a paper substrate beyond expectations, and that the paper substrate as such does not need to have inherent barrier properties.

In a further embodiment, the flexible and equalizing base coating may be an aqueous composition comprising an inorganic filler material and a bio-based polymer binder material having inherent ductility properties, selected from the group comprising starch derivatives, polyisoprene, lignin-based polymers, alginates, gums, and soy-based proteins as a latex of one or more such bio-based polymer binder material.

The flexible and equalizing base coating may be applied by means of suitable dispersion coating techniques, such as blade coating, rod coating, bar coating, smooth roll coating, reverse roll coating, lip coating, air knife coating, curtain flow coating, dip coating and slot die coating methods, and subsequent drying to evaporate the dispersion medium, normally water, by forced convection drying. Preferably, the flexible and equalizing base coating is applied by blade coating, roll coating or rod coating technology and subsequent drying. The term aqueous dispersion coating includes thus coating of aqueous compositions of binder polymer emulsions, dispersions, suspensions, solutions and latex formulations, further comprising a substantial amount, such as more than 50 weight-% of more of pigments, inorganic particles or other filler material.

The flexible and equalizing base coating may comprise a polymer binder of an aqueous latex composition, such as a latex selected from the group comprising styrene-butadiene latex (SB-latex), methylstyrene-butadiene latex, styrene acrylate latex (SA-latex), acrylate latex, such as vinyl acrylic copolymers and vinyl acetate acrylate latex, styrene-butadiene-acrylonitrile latex, styrene-acrylate-acrylonitrile latex, styrene-butadiene-acrylate-acrylonitrile latex, styrene-maleic anhydride latex, styrene-acrylate-maleic anhydride latex, mixtures thereof, or bio-based latex made with plant-based polymer materials. Also e.g. styrene-acrylate latex or styrene-butadiene latex may be at least partly derived from biomass to provide similar performance with an improved carbon footprint.

The flexible and equalizing base coating may in an embodiment comprise a polymer binder based on substantially plant-based material sources, by producing an aqueous latex composition comprising an emulsion of a bio-based polymer binder material, such as selected from the group comprising starch derivatives, including modified starches and crosslinked starches, polyisoprene, lignin-based polymers, alginates and gums, such as guar gum, and soy-based proteins, including latex compositions of the type "Ecosphere" from Ecosynthetix, "Vytex" from Vystar, "NeoLigno" from Stora Enso, "OC-Binder" from Organoclick, "Polygal" surface coatings from Polygal. The bio-latex composition Ecosphere^{®} from Ecosynthetix is for example an aqueous latex of crosslinked starch particles. A latex may be manufactured by aqueous emulsion polymerization. Alternatively, as in the case of manufacturing a latex from a biopolymer, the biopolymer material such as starch may be plasticized under shear force to suitable particle size, and subsequently be crosslinked by the addition of a crosslinking agent. Thereafter, the biopolymer particles may be added to a water dispersion to form an aqueous latex or suspension of the particles.

The flexible and equalizing base coating may thus comprise an aqueous latex composition comprising a polymer material having inherent ductility properties selected from the group consisting of styrene-butadiene copolymers (SB), styrene acrylate copolymers (SA), other acrylate polymers and acrylate copolymers, such as vinyl acrylic copolymers and vinyl acetate acrylate copolymers, and of aqueous latexes of bio-based polymer materials.

In a further embodiment, the flexible and equalizing base coating may comprise an aqueous latex composition of a bio-based polymer material having inherent flexible properties selected from the group comprising starch derivatives, including modified starches and crosslinked starches, polyisoprene, lignin-based polymers, alginates, gums, and soy-based proteins.

In yet a further embodiment, the flexible and equalizingbase coating may comprise an aqueous latex composition comprising crosslinked starch particles.

The latex composition may further comprise inorganic filler particles, such as kaolin clay or other laminar clay compounds, silica particles, talcum particles and/or calcium carbonate, at from 40 to 96 weight-% of the dry content, such as from 50 to 96 wt-%, such as from 60 to 96 wt-%, such as from 70 to 96 wt-% of the dry content. The filled coating composition appears to prevent steam bubbles from disrupting or eroding any subsequently and adjacently applied coating layer, however thin it may be. This is an important advantage, since a laminated packaging material comprising the barrier-coated bulk layer may be used under high humidity climate conditions, which accordingly loads the papers or cellulose-based fibrous layers within the laminate with a higher moisture content. Typically, the moisture content in the paper at equilibrium under 80 % relative humidity (RH), is around 12 %, while at higher RH even closer to 15 % may be expected.

The filler content may further support the flexibility of the flexible and equalizing base coating, while also reducing tensions in the base coating, such that the base coating can follow the fibrous cellulose substrate as it is folded, without generating cracks in the base coating itself or in the first gas barrier coating subsequently applied onto the base coating.

The flexible and equalizing base coating may further comprise additive compounds, such as thickening agents and crosslinking compounds, at additive amounts. Such additive amounts would be included only at up to 10 weight-% of the flexible and equalizing base coating, based on dry weight.

In another embodiment, the flexible and equalizing base coating may comprise from 10 to 20 wt% of the polymer binder material having inherent flexibility properties, from 75 to 85 wt-% of an inorganic filler, from 3 to 5 wt% of a crosslinking compound, such as starch, and from 1 to 2 wt% of a thickening agent, based on dry weight.

The filler material may be an inorganic filler selected from the group comprising clays, such as nano-clays including bentonite clays, kaolin clay, talcum, CaCO₃, and silica particles.

The filler material may be an inorganic laminar compound, such as bentonite clay or kaolin clay. Specifically suitable such laminar clay minerals may be laponite, kaolinite, dickite, nacrite, halloysite, antigorite, chrysotile, pyrophyllite, montmorillonite, hectorite, saponite, sauconite, sodium tetrasilicic mica, sodium taeniolite, commonmica, margarite, vermiculite, phlogopite, xanthophyllite and the like. A specific type of such nano-clay laminar particles are those of montmorillonite, e.g. sodium-exchanged montmorillonite (Na-MMT). Such laminar inorganic particles may be exfoliated to efficiently provide a barrier to migrating low-molecular compounds, and may thus also provide good resistance to sudden bursting of steam in adjacent layers.

The polymer of the flexible and equalizing base coating may be selected to exhibit a glass transition temperature from -50 to +100 degrees Celsius, such as from -30 to +80 degrees Celsius, to provide inherent flexibility to a paper substrate coated with a base coating thereof.

The fibrous cellulose substrate may further have a second flexible and equalizing base coating on its opposite side, which may be of the same type as the flexible and equalizingbase coating on the first side of the substrate. It is, however, preferred that the fibrous cellulose substrate has a flexible and equalizing base coating only on its first side.

The flexible and equalizing base coating should be applied directly onto, adjacent and contacting the surface of the fibrous cellulose substrate. The paper may allow moisture to diffuse outwards through the laminated packaging material, and the flexible and equalizing base coating material may also allow such water vapour migration, to prevent unfavourable entrapment of moisture near a moisture sensitive barrier coating of e.g. PVOH or EVOH. Any moisture migrating through the material from the inside liquid food product in the package will slowly be further transported via the paper layer and the paperboard bulk layer of the laminated packaging material towards the outside of the packaging container. The fibrous cellulose substrate and the paperboard bulk layer may then "breathe away" the humidity from the oxygen first gas barrier coating and thus keep the moisture content within the gas barrier coating(s) substantially constant over time, after having reached equilibrium.

The flexible and equalizing base coating needs to be further smoothened after coating and forced convection drying onto the bulk layer. A soft calendering operation may make the surface of the flexible and equalizing base coating smooth, to a surface roughness below 3 µm, such as below 2.5 µm (PPS), as measured by ISO 8791-4. The smoothening operation is not, however, performed at high line load, such as not above 200 kN, such as not above 150 kN, and is thus not a super-calendering operation. Soft calendering is performed by a soft, extensible outer layer on the press roller, while the anvil roller may be a hard steel roller. In a hard calender roller nip, on the other hand, both rollers have a hard, incompressible surface, such as being steel rollers.

The flexible and equalizing base coating composition is applied onto the substrate by an applicator. The most suitable type of system for dispersion coating of the flexible and equalizing coating or coating compositions are blade coaters, roll coaters or rod coaters, where a large amount of coating composition is applied to the paper and the surplus is scraped off again. Common applicators may be jet applicators, roll applicators and short dwell time applicators (SDTA). An advantage of roll applicators is that bad formation of a substrate paper is less critical for the roll applicator and it is therefore well suited when thick coatings are desired. Blades that are used to scrape off excessive amount of coating are made of steel and may be equipped with a ceramic tip that makes them last longer. After the coating is applied it passes trough a drier, usually an IR-drier, hot air drier or a cylinder drier.

An outside printable pigment coating on the outer side of the paperboard, i.e. a clay coat, which would normally fulfil the requirements also of a flexible and equalizing base coating, may be replaced with a separate print-substrate paper. In this way, a conventional liquid paperboard, only clay-coated on one side, may still be used in the laminated packaging material, however turned inside out, in the non-conventional direction in a laminated material, and thus be further laminated to such a print-substrate paper to still provide a printable laminated structure. The separate print substrate paper may be laminated to the bulk layer by a wet lamination method, using only low amount of an aqueous adhesive composition, at from 1 to 5 g/m², dry matter. Alternatively, it may be melt extrusion laminated to the bulk layer by a thin layer from 6 to 10 g/m², such as from 7 to 9 g/m², of a thermoplastic polymer. Such a thin layer of a bonding polymer between the two cellulose-based layers (a print substrate paper and a bulk layer) has proven to be easily delaminated and repulpable in a recycling process, to provide a pure fibre fraction in short repulping times.

The separate print-substrate paper may be pre-coated, by a thin dispersion coating and subsequent drying of a functional migration barrier towards mineral-oil contained substances from recycled fibres, so-called MOSH or MOC substances. This may become a more urgent, future need, as increased recycling of printed paper and paperboard is required, thus re-using old cellulose fibres in a "circular fibre economy". Thus, as the future bulk paperboard may comprise re-used fibre content, such migration barriers may be needed on both sides of it, to encapsulate any remaining MOC content therein. The oxygen barrier materials applied on the inside of the paperboard in a liquid carton packaging laminate usually also function as such MOC barriers. On the outside, however, a further MOC barrier is needed, and this may eficiently be applied onto a separate print-substrate paper, as described above. In this way, the fibre content of the laminated packaging material is still held at a high proportion, without the need for further polymer films or polymer barriers to be laminated into the structure.

The additional print-substrate paper may add bending stiffness and mechanical properties to the laminated packaging mateiral "sandwich structure" in such a way that the thickness and bending stiffness of the bulk layer, i.e. the liquid carton paperboard, may also be reduced on the other hand. A suitable print substrate paper may have a surface weight of 100 g/m² or lower (ISO 536), and an outside print surface having a Bendtsen surface roughness value lower than 100 ml air/min (ISO 8791-2).

The print surface of the print substrate paper may have a Cobb ("Cobb 60") absorption value, measured in accordance with ISO 535, from 22 to 28, such as from 24 to 27, such as from 24 to 26 g/m² of water. The cellulose composition of the print substrate paper needs to be sized, to resist edge wicking, i.e. to resist absorption of water or liquid at the exposed paper edges of a cut laminate structure, and to resist too much absorption of water from the aqueous adhesive composition in the lamination operation, laminating the print substrate paper to the bulk material layer. A Cobb 60 value above 30 may mean that the paper may absorb too much of the aqueous composition, which would result in a weaker bond from the aqueous adhesive absorption lamination. The cut edges of the laminate also absorb the aqueous composition such that the laminated material swells and delaminates along the exposed edge areas. On the other hand, at too low Cobb values, such as below 20, there may be problems in adhering a printed ink to the print substrate paper, and to further coat the printed paper with a thermoplastic polymer layer. Preferred Cobb values on the print substrate paper are thus from 24 to 26 g/m² of water, to balance absorption vs adhesion properties.

The sizing is suitably an internal, dual sizing, i.e. two kinds of sizing agents are added to the cellulose pulp in the manufacturing of the paper from the pulp. Suitable such dual sizing agents are alkylketene dimer (AKD) together with Rosin (Hartz). AKD may alternatively be used as a single sizing agent. Another possible sizing agent is alkylene succinic anhydride (ASA).

Sizing is done by adding from 1 to 4 kg/ton, such as from 2 to 4 kg/ton of sizing agent(s) to the cellulose pulp, i.e. from 0.1 (0.2) to 0.4 weight-%.

The print surface may have a Bendtsen surface roughness value of below 80 ml air/min, such as below 60 ml air/min, such as below 70 ml air/min. The smoother the better resulting print quality. Further, the print substrate paper may have a surface weight lower than 80 g/m², such as lower than 70 g/m².

The print substrate paper may have a tensile strength index (GM) of at least 40 Nm/g, to better cope with the forces applied in the lamination processes. Furthermore, for this purpose, it may have a tear strength index of at least 6 mNm²/g.

More specifically, the print substrate paper may have a density higher than 650 kg/m³, a surface weight of 100 g/m² or lower (ISO 536), a tensile strength index (GM) of at least 40 Nm/g, a tear strength index (GM) of at least 6.0 mNm²/g, and comprising at least one sizing agent at from 0.1 to 0.4 wt-%, the outside print surface having a Bendtsen surface roughness value lower than 100 ml air/min (ISO 8791-2), and a Cobb value greater than 20 g/m² and lower than 30 g/m² (water).

The print substrate paper may thus be a paper having a smooth printable surface selected from the group consisting of MG (Machine Glazed) paper, MF (Machine Finished) paper, LWC (Light-weight coated) paper, Flexible Packaging paper, metallization base paper, digital printing paper, copy paper and ink jet printing paper.

MG paper is paper having a high-gloss finish on one side, produced by allowing the wet paper web to dry against a highly-polished metal cylinder, also called a Yankee cylinder or Yankee dryer, of a paper machine. MG paper may be MG Kraft paper, and may be very thin papers, often used as wrapping papers and posters. The surface roughness may be from 40 to 150 ml air/min, Bendtsen. For the present invention, MG papers of surface roughness below 100 ml/min would be selected.

MF paper has a similarly smooth surface to MG papers but may be obtained by calendering on a paper machine with a final smoothening machine roller treatment.

LWC paper is a category of paper, acknowledged in the paper industry, which has a thin white coating and is partly based on mechanical pulp and used for example for weekly magazines.

Flexible packaging paper is another category of suitable papers, acknowledged in the paper industry, having a smooth surface, and which only contains chemical pulp. It is normally a one-side coated thin Kraft paper, but may alternatively be un-coated. This kind of paper is often used e.g. for food packaging. The term "Flexible" distinguishes the paper type from inflexible carton (bending mode). The Surface Roughness of Flexible Packaging papers can be as low as about 15 ml air/min.

By employing a separate print substrate paper as the substrate for a printed decorative pattern, late customization of the laminate packaging material may be possible, i.e. by late combination of bulk material layer and print substrate paper for the desired and suitable mechanical properties, depending on package size and type. It is also possible to customize late regarding which background for the printed décor to deliver, depending on the customer brand and type of product to be filled into the packaging containers. Different possible backgrounds may be papers of various colours or shades, decorative silver- and gold-metallised paper surfaces or other different preprinted patterns or metallised backgrounds having embossed and engraved features, tactile or relief surface effects, matte/glossy effects e.t.c. Such late customisation is a further cost-efficient way of providing new and premium-looking appearance and consumer appeal to a good, reliable, functional packaging material.

The print-substrate paper may be bonded to the bulk layer by wet application of a dispersion of an aqueous adhesive composition comprising an adhesive polymer binder onto one of the web surfaces to be laminated and then pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus be no need for a forced drying step. The coated cellulose-based fibrous print-substrate may thus be laminated to the bulk layer by from 0.5 to 6 g/m², such as from 1 to 5 g/m², such as from 1 to 4 g/m², dry weight, of an interjacent bonding composition comprising a binder selected from the group consisting of acrylic polymers and copolymers, starch, starch derivatives, cellulose derivatives, polymers and copolymers of vinyl acetate, polymers and copolymers of vinyl alcohol, copolymers of styrene-acrylic latex or styrene-butadiene latex or adhesive bio-latexes. For best possible environmental and sustainability profile, adhesive binders originating from plants or non-fossil sources, such as starch or other polysaccharides, are preferred.

The low amount of such an interjacent bonding composition is only possible to apply by aqueous dispersion or solution coating of a polymer binder, and is not possible to apply by extrusion coating or extrusion lamination of a single-layer polymer melt due to the nature of the molten-layer extrusion process. Since the surfaces of the layers to be bonded together are both made of cellulose, such wet lamination is made by the absorption of the aqueous medium into the respective cellulose layers, and thus a thin and dry bonding layer at the interface between the two layers may be formed.

By adding or in this way replacing some materials in the laminate, a laminated packaging material with a high content of recyclable cellulose fibre content may thus be provided.

In a second aspect of the invention, the laminated packaging material of the first aspect may be used in a packaging container, which may be intended for packaging of liquid, semi-liquid or wet food, such as of milk or other liquid dairy products. There is thus provided a packaging container, which is manufactured at least partly from the laminated packaging material, or, which is in its entirety made from the laminated packaging material.

In a third aspect of the invention, a method of manufacturing the laminated packaging material of the first aspect is provided, which comprises
a first step of providing a bulk layer of a carton or paperboard as a moving web in a roll-to-roll system, the bulk layer having a flexible and equalizing base coating, which has been applied by means of dispersion coating a composition comprising from 25 to 96 weight-% of inorganic particles and from 4 to 75 wt-% of a polymer binder, per dry weight, subsequent drying by forced evaporation and smoothening, such as by calendering, the surface of the base-coated bulk layer,
a second step of dispersion coating an aqueous second dispersion or solution of a first gas barrier coating composition, onto the moving, smoothened base-coated bulk layer, and subsequently drying the applied first gas barrier coating by forced heat evaporation,
optionally repeating the second step, and
a third step of laminating a web of the metallized polymer film as described in the first aspect, to the inner, barrier-coated side of the web of the bulk layer obtained from the second step, by melt extruding an interjacent thermoplastic polymer bonding layer between the two webs and pressing the webs together in a laminating roller nip, and optionally,
(co-)extrusion coating a second innermost, liquid tight, heat sealable material layer or multilayer portion, comprising a thermoplastic polymer, on the inner side of the metallized polymer film.

The laminated packaging material obtained by the above described methods and coating layer configurations, provides good gas barrier properties, integrity as well as openability to a laminated packaging material, as well as to packaging containers manufactured therefrom, and may also maintain the recyclability and sustainability profile of such packaging materials and packaging containers.

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, drinks from rice, grains and seed, juice, nectar, still drinks, water, flavoured water, energy drinks, sport drinks, coffee or tea drinks, coconut water, wine, soups, and olive oil are some non-limiting example of food products contemplated.

Further examples of other oxygen-sensitive food products, possible to package and protect with the laminated packaging materials of the present disclosure are e.g. dry and/or fatty foods, such as milk powders and other powdered food. Examples of fatty foods are cheese, butter and spreads. Such packaging may be flow-wrap packaging or form, fill, seal (FFS) packaging, e.g. in bags. It may also be packaging in a jar, tray, lidded spread container, collapsible tube, clam-shell package, sleeve, envelope or wrapper. In these applications, the packaging material typically undergoes folding or a similar type of stress (e.g. creasing, stretching), which make the packaging material present disclosure particularly suitable.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and dimensional stability of the laminate and the structural stability of packaging containers folded from the laminate, based on thick paper, paperboard or carton. It may also mean a layer providing a greater thickness distance in a sandwich structure, which further interacts with stabilising facing layers, which have a higher Young's modulus, on each side of the bulk layer, in order to achieve sufficient mechanical properties, such as bending stiffness, for achieveing structure stability of formed packaging containers.

With the term "non-foil" packaging material, is meant a laminated packaging material, which does not comprise an aluminium foil of a thickness in the micrometer-scale, such as conventional aluminium foils for liquid carton packaging which are normally from 6 to 9 µm thick. A "non-foil" packaging material may comprise a metallisation layer, however, as the thickness of e.g. an aluminium metallisation layer is in the nano-meter scale. The amount of aluminium material employed in such a metallisation coating is very low, and have, in comparison to aluminium foils, a significantly reduced impact on recycling and exploitation of material resources.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. An aqueous dispersion may comprise fine polymer-based particles and thus be a "latex".

The term "latex" as used herein refers to a composition comprising an aqueous suspension or dispersion or emulsion of polymer particles, which can be natural polymers, synthetic polymers, synthetic polymers derived from biomasses or combinations thereof.

The OTR of the samples of the two, comparative laminated packaging materials was determined at the unit cm³/m²*24 h*0.2 atm 23 °C, 50 % RH by means of an Oxtran 2/21 (Mocon) equipment, according to ASTM D3985 and ASTM F1927-14.

The oxygen transmission rate of packages (filled, emptied and dried) was measured according to ASTM F1307-14, at 0.2 atm (surrounding air containing 21 % oxygen). The unit is cm³/package/24h, at conditions of 23 °C and 50 % RH. For the OTR measurement, the packages were mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen leaks into the nitrogen gas inside the package.

Grammages of papers were determined according to the official test method of ISO 536:2019 by the unit g/m², while thickness and density were determined according to ISO 534:2011, by the units µm (m) and kg/m³, respectively.

Thickness measurements of coated polymer layers on paper and in laminate strcutures may be measured and estimated by taking sliced section samples of the structure and studying them in a SEM microscope. The slicing may be done using e.g. a cryo microtome.

Surface roughness was measured according to ISO 8791-4.

A packaging laminate for use in packaging containers for aseptic, long-term storage of liquid food, needs to have water vapour barrier properties.

With water vapour barrier properties is meant a barrier against slowly migrating water vapour through the material, i.e. not the immediate liquid barrier properties. As an example, heat sealable polyolefins, such as the preferred low density polyethylenes (LDPE's or LLDPE's), are liquid barriers and are suitable as outermost layers to protect the paperboard inside of a laminate against the filled liquid product or against wet conditions outside the package, such as at high humidity or chilled storage. Low density polyethylene has, however, comparably low water vapour barrier properties, i.e. actually no capability at reasonable thickness, to withstand the long-term, slow migration of water vapour through the laminate during shipping and storage. Water vapour barrier properties are important during long-term storage, also because they prevent moisture from a packaged liquid food product from escaping out of a packaging container, which could result in a lower content of liquid food product than expected in each packaging container, when finally opened by the consumer. Possibly also the composition and the taste of the product could be altered by becoming more concentrated. Moreover, by preventing water vapour from migrating escaping out of the packaging container into the paper or paperboard layer, the packaging laminate will be able to keep its stiffness properties, and its oxygen barrier properties, for a longer time. Thus, it is important that the packaging material also has sufficient water vapour barrier properties to be suitable for long-term aseptic packaging of liquid products.

Thin aluminium metallised layers, i.e.vapour deposited layers of aluminium metal, normally provide excellent water vapour barrier properties. However, the oxygen barrier properties are normally not sufficient by a low-cost, metallization coating, such as of a low-cost metallized polyolefin film.

The first gas barrier coating, which provides laminated packaging material of the invention with its basic gas barrier properties, may be an oxygen gas barrier dispersion coating, applied by means of dispersion or solution coating.

Gas barrier coatings applied by means of coating of an aqueous dispersion or solution of an oxygen gas barrier composition may comprise polymers which have inherent oxygen gas barrier properties, and which are food safe and environmentally sustainable both regarding recyclability and in industrial coating and lamination processes. Such polymers are thus water dispersible and/or dissolvable in water and may be applied by means of an aqueous "dispersion coating" process, or a so called "liquid film coating" process. Non-aqueous or only partly aqueous coating compositions, such as those based on alcohols or mixtures of alcohol and water, could also be suitable for achieving the good results from this invention. They would, however, likely be less suitable from environmental sustainability point of view, than water-based coating compositions.

In an embodiment, the gas barrier dispersion coating comprises a polymer selected from the group consisting of vinyl alcohol polymers and copolymers, such as from the group consisting of polyvinyl alcohol (PVOH) and ethylene vinyl alcohol (EVOH), starch, starch derivatives, xylan, xylan derivatives, nanofibrillar cellulose/ microfibrillar cellulose (NFC/ MFC), and of blends of two or more thereof.

In a further embodiment, the gas barrier dispersion coating is applied by means of dispersion or solution coating at a total amount of from 0.2 to 6 g/m², such as from 0.5 to 5 g/m², such as from 0.5 to 4 g/m², such as from 0.5 to 3.5 g/m², such as from 1 to 3.5 g/m², such as from 1 to 3 g/m², dry weight.

Processes suitable for coating of low dry-content gas-barrier polymer dispersion/ solution compositions are broadly any suitable wet coating methods, such as gravure roll coating, smooth roll coating, reverse roll coating, wire bar coating, blade coating, lip coating, air knife coating, and curtain flow coating methods. The experiments for the present invention were performed by means of smooth roller coating, but it is believed that any of the above or other liquid film coating methods that would contribute to generate a homogeneous layer with smooth and even coated surface would be suitable for providing gas barrier coatings out the invention.

It is highly important that the coating applied is evenly coated, forming a continuous and coherent film on the surface and furthermore being defect-free, i.e. substantially without pinholes, blisters or coating misses. Even if a very small defect, its effect on the barrier properties may be negative, which is not desirable. In non-foil packaging materials, i.e. materials without a thick metal foil that can ensure good barrier properties in general, it is very important to reduce the defects of the very thin and more sustainable material coatings to a minimum. It is advantageous to apply at least two coatings on top of each other, to cover and overlap any defects in the separate, thin coating layers.

In a more specific embodiment, the oxygen barrier dispersion coating compositions are based on the two most common types of polymers and coplymers suitable for dispersion coating, based on on vinyl alcohol monomers, i.e. polyvinyl alcohol (PVOH) and ethylene vinyl alchol (EVOH).

The oxygen gas barrier polymer may preferably be PVOH, because it provides good film formation properties, gas barrier properties, cost efficiency, food compatibility and odour barrier properties.

A PVOH-based oxygen gas barrier composition performs best when the PVOH has a degree of saponification of at least 98 %, preferably at least 99 %, although also PVOH with lower degrees of saponification will provide oxygen barrier properties.

On the other hand, EVOH may be advantageous by providing some moisture resistance to the barrier material, since the copolymer comprises ethylene monomer units. The amount of ethylene monomer units depends on the choice of EVOH grade, but its presence will be at the expense of some oxygen barrier property, in comparison to pure PVOH. Conventional EVOH polymers, are normally intended for extrusion and are not possible to disperse or dissolve in an aqueous medium in order to produce a thin liquid film coated barrier film of 3,5 g/m² or below. It is believed that EVOH should comprise a rather high amount of vinyl alcohol monomer units to be water-dispersible and that the properties should be as close to those of liquid film coating grades of PVOH as possible. An extruded EVOH layer is thus not an alternative to a liquid film coated EVOH, because it inherently has less similar properties to PVOH than EVOH grades for extrusion coating, and because it cannot be applied at a cost-efficient amount below 5 g/m² as a single layer by extrusion coating or extrusion lamination.

Nano-crystalline cellulose, NCC, is a form of nano-cellulose but is not the same as "microfibrillar cellulose", "MFC" (CMF) or "nanofibrillar cellulose", NFC (CNF)".

MFC/ NFC may thus contain longer particles, so-called "fibrils" having a width of 10-1000 nm, and a length of at least 1 µm, such as up to 10 µm, such as up to 100 µm.

Both MFC and NFC have an aspect ratio of 50 or above, while NCC/ CNC may be defined to have an aspect ratio below 50, e.g. in accordance with ISO/TS 20477:2017 and the draft TAPPI norm WI3021.

The term "NCC", is used for shorter particles and "rod-like" particles, having a width of 3-100 nm, and a length from 100 too above 1000 nm, such as from 100 to 3000 nm, such as from 100 to 1000 nm, such as from 100 to 500 nm. The majority of the NCC particles in the composition should have this dimension, may be from 100 to 500 nm length, such as from 100 to 200 nm and with a small width of from 3 to 100 nm.

The oxygen barrier dispersion coating composition may further comprise from about 1 to about 30 weight %, of an inorganic laminar compound based on dry coating weight, such as exfoliated nanoclay particles, such as bentonite. Thus, the barrier layer may include from about 99 to about 80 weight % of the polymer based on the dry coating weight. An additive, such as a dispersion stabiliser, defoamer or the like, may also be included in the oxygen gas barrier composition, preferably in an amount of not more than about 1 weight % based on the dry coating. The total dry content of the composition is preferably from 5 to 20 weight-%, such as from 7 to 15 weight-%.

A further possible additive in the first gas barrier coating composition may be a polymer or compound with functional carboxylic acid groups, in order to improve the water vapour and oxygen barrier properties of a PVOH coating. Suitably, such polymer with functional carboxylic acid groups is selected from among ethylene acrylic acid copolymer (EAA) and ethylene methacrylic acid copolymers (EMAA) or mixtures thereof. In one embodoment, such a barrier layer mixture may essentially consist of PVOH, EAA and an inorganic laminar compound. The EAA copolymer may be included in the barrier layer in an amount of about 1-20 weight %, based on dry coating weight.

It is believed that some further improved oxygen and water barrier properties may result from an esterification reaction between the PVOH and the EAA at an increased drying temperature, whereby the PVOH is crosslinked by hydrophobic EAA polymer chains, which thereby are built into the structure of the PVOH. Crosslinking can alternatively be induced by the presence of polyvalent compounds, e.g. metal compounds such as metal-oxides. Such mixtures are, however, more expensive because of the cost of the additives and may be less preferred from a recyclability point of view. Accordingly, while it is more preferable to use a barrier dispersion coating from a pure PVOH or EVOH composition, advantageous gas barrier results may be obtainable also with oxygen barrier dispersion coatings comprising further additives as described above.

The barrier dispersion coating may thus be applied at a total amount of from 0.2 to 5 g/m², such as from 0.2 to 4 g/m², more preferably from 0.5 to 4 g/m², such as from 0.5 to 3.5 g/m², such as from 1 to 3 g/m², dry weight. Below 0.2 g/m², there will be no gas barrier properties achieved at all, while above 3.5 g/m², the coating may bring less cost-efficiency to the packaging laminate, due to high cost of barrier polymers in general and due to high energy cost for evaporating off the liquid. A recognisable level of oxygen barrier is achieved by PVOH at 0.5 g/m², and above, and a good balance between barrier properties and costs is normally achieved between 0.5 and 3.5 g/m².

In an embodiment, the gas barrier dispersion coating may be applied in two, three or even four consecutive steps with intermediate drying, as part-layers. When applied as two part-layers or "part-coatings", each layer may suitably be applied in amounts from 0.2 to 2.5 g/m², preferably from 0.5 to 1.5 g/m², and allows a higher quality total layer from a lower amount of liquid oxygen gas barrier composition. More preferably, the two part-layers may be applied at an amount of from 0.5 to 1.5 g/m² each.

For the unexpected improvement of the invention, the gas barrier dispersion coating shall thus not be coated directly onto the paperboard bulk layer but shall be preceded by a first flexible and equalizing base coating of a different polymer and material composition than the gas barrier material composition, to prepare the substrate surface for the application of the thin gas barrier coating. It is believed that the properties of the aqueous flexible and equalizing base coating composition enable a dense and even base layer top surface for further gas barrier coating and a compatible adhesion chemistry and wettability for the subsequent application of for example a polyvinyl alcohol-based gas barrier coating. The flexible and equalizing base coating has the capability to absorb stress and strain on the barrier-coated bulk layer as it is folded and abused, in a laminated packaging material.

A paper or paperboard bulk layer may have a thickness of from about 100 µm up to about 600 µm, such as from 300 to 450 µm, and a surface weight of approximately 100-500 g/m², such as about 200-350 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper bulk layer for such pouch-packages usually has a surface weight of from about 50 to about 140 g/m², preferably from about 70 to about 120 g/m², more preferably from 70 to about 110 g/m².

The metallized polymer film may be bonded to the bulk layer by at least one interjacent bonding layer, comprising at least on bonding polymer, thus binding also to the barrier-coated surface of the bulk layer. Theinterjacent bonding layer may be a polyolefin layer, such as in particular a layer of a polyolefin copolymer or blend, such as including in the majority ethylene monomer units. The bonding layer may bond the bulk layer to the metallized polymer film by melt extruding the molten bonding polymer as a melt layer between the webs and simultaneously pressing the three layers together, while being forwarded through a lamination roller nip under simultaneous cooling, thus providing a laminated structure by extrusion lamination. Melt extrusion lamination requires a sufficient amount of molten polymer, in this case typically a polyolefin, such as low density polyethylene, to bind the two colder surfaces together. A suitable amount is typically from 6 to 20 g/m², such as from 7 to 15 g/m².

The interjacent bonding layer and also other suitable interjacent bonding or tie layers in the interior of the laminated material, such as for example between the bulk or core layer and the metallized polymer film, may alternatively be so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or maleic anhydride (MAH) grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

The interjacent bonding layer may be a multilayer coextrusion of sublayers, e.g. having two or three sublayers to better adapt and tailor-make a good level of adhesion to the respective adjacent surfaces to be boneded together.

Suitable materials for the outermost and innermost liquid-tight layers may be separately melt extrusion coated, thermoplastic polymers, such as polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. Such thermoplastic polymers also have the advantage of being readily weldable, i.e. heat sealable, to the same or similar polymers and to other materials with thermoplastic behaviour. According to an embodiment, the outermost heat sealable and liquid-tight layer may be an LDPE, while the innermost heat sealable, liquid-tight layer may be a blend composition of m-LLDPE and LDPE for optimal lamination and heat sealing properties.

The outermost layer may be merely protective towards liquid and dirt, such that any sealing of the outside surface to another surface or item, such as an opening device or the like, will be carried out by an additional glue or hot melt.

For packaging of liquid, semi-liquid, viscous flowing products and wet food, the packaging container qualities are dependent on that the innermost layer is heat-sealable to produce strong and tight packages that can carry the filled product under all circumstance in handling and distribution. The innermost layer is therefore liquid-tight as well as heat sealable.

The same thermoplastic materials, as listed regarding the outermost and innermost layers, such as polyolefins and in particular polyethylene-based materials, may also be suitable in bonding layers in the interior of the laminated material, i.e. between a bulk or core layer, such as paper or paperboard, and the metallized polymer film. The thermoplastic bonding layer may preferably be a polyethylene layer, such as a low density polyethylene (LDPE) layer.

The innermost liquid tight, heat sealable polyolefin layer may be constituted of the pre-manufactured, metallized polymer film substrate, as defined in the first aspect, for heat sealability, package integrity and for the mechanical properties of the packaging material. Due to the manufacturing process in pre-manufacturing, film blowing or film casting operations, and optional subsequent film orientation operation steps, the polymers of such films may acquire different properties from what is possible from merely (co-) extrusion coated polyolefin layers. Such a pre-manufactured polymer film may thus contribute to the mechanical robustness of a laminated packaging material and to mechanical strength, package integrity and further reduced loss of barrier properties of formed and filled packaging containers from the laminate packaging material.

The innermost layer of a liquid tight, heat sealable material may alternatively, or additionally, be a separately applied layer of a polyolefin, suitably by melt extrusion coating, such as preferably a blend of low density polyethylene, LDPE, and metallocene-catalysed (using a single-site or constrained-geometry catalyst), linear low density polyethylene, m-LLDPE. This is the type of polymer most used today for the innermost layer, for best balanced liquid tightness and heat sealability properties, and which generates best possible package integrity of heat sealed packaging containers. By choosing the composition of this layer carefully, the amount of polymer in this layer may be optimised to be as low as possible while still producing strong and reliable packages filled with product.

The purpose of the specific metallized polymer film used in the laminated packaging material of the invention, is to add complementary properties to the laminated packaging material, wherein a gas barrier-coated bulk layer, is the main gas barrier material in the laminate structure. By laminating the barrier-coated bulk layer to the further metallized polymer film, which may add further moisture-resistance or water vapour barrier properties, the at least two different barrier materials may interact to provide further enhanced total barrier properties to the total laminate structure. The metallized polymer film delays diffusion of water vapour through the laminated stucture from the inside filled liquid food product towards the outside of a packaging container. The necessary bonding layer between the barrier-coated bulk layer and the metallized film may ensure such enhanced barrier properties. Even though a flexible and equalizing base coating of a clay- or mineral-filled emulsion binder composition has shown to mitigate oxygen leakage, i e leads to less damage of the first gas barrier layer of PVOH or EVOH during creasing and folding, some damage is noted. Since there is an interjacent polymer bonding layer between the PVOH or EVOH-barrier layer and the metallized coating, the metallized coating is not simultaneously damaged and can therefore cover up for the oxygen gas permeation caused by the damage of the PVOH or EVOH-barrier coating layer by acting as a reasonable oxygen barrier layer in those areas.

The outer- and innermost, liquid-tight layers and the lamination layers in the interior of the laminate structure, do not normally and inherently add high barrier properties to migrating gas molecules or small molecules. Their purpose is to provide a direct barrier to water in liquid form from penetrating through to the cellulose-based bulk material and other paper layers. The liquid barrier layers also prevent water vapour from migrating to the cellulose to the extent that it gets wet, but are not capable of keeping the moisture content of the laminated structure at zero or at the low level of "dry" paper (which is at about 7-8 % in an environment at ambient temperature, i.e. at 23 deg C, and 50 % relative humidity, RH). The moisture content in the laminated carton material of a packaging container filled with liquid is usually rather high and migration through the material occurs, unless there is a good water vapour barrier included, being the metallized film.

A laminated packaging material as described above may provide good integrity when transformed into filled packaging containers, by good adhesion between the adjacent layers within the laminated construction and by providing good quality of the barrier coatings and the flexible and equalizing base coating, each and in combination. Especially, for the packaging of liquid food, it is important that the inter-layer adhesion within the laminated packaging material, as well as the oxygen gas barrier properties, is maintained also under wet packaging conditions.

A packaging container formed from a described laminated packaging material may be partly sealed, filled with liquid or semi-liquid food and subsequently sealed, by sealing of the packaging material to itself, optionally in combination with a plastic opening or top part of the package.

To conclude, robust and reliable heat sealed packages for liquid food packaging for long term shelf-life and storage may be obtained from packaging materials laminated as defined by the claims, thanks to the oxygen barrier properties being well maintained during folding of the packaging material and thanks to the material.

### Examples and description of preferred embodiments

In the following, preferred embodiments of the invention will be described with reference to the drawings, of which:
Fig. 1 shows a schematic, cross-sectional view of an embodiment of the laminated packaging material of the invention,
Fig. 2 is showing a schematic, cross-sectional view of an alternative embodiment of the laminated packaging material of the invention,
Fig. 3a shows schematically a method, for dispersion coating a flexible and equalizing base coating composition or a gas barrier dispersion coating onto a paperboard bulk layer as the substrate,
Fig. 3b shows schematically a method, for melt extrusion laminating two webs together,
Fig. 3c shows schematically a method, for melt (co-) extrusion coating layer(s) of a thermoplastic heat sealable and liquid-tight polymer onto a web sustrate, to form a respective innermost and outermost layers in a packaging laminate of the invention,
Fig. 4 shows a diagrammatic view of a plant for physical vapour deposition (PVD) coating, by using a solid metal evaporation piece, onto a substrate, such as the polymer film substrate of a metallized polymer film,
Fig. 5a, 5b, 5c and 5d are showing typical examples of packaging containers produced from a laminated packaging material of the invention,
Fig. 6 is showing the principle of how such packaging containers may be manufactured from the packaging laminate in a continuous, roll-fed, form, fill and seal process, and
Fig. 7a and 7b show diagrams visualizing the results of the measurements of oxygen transmission rate, OTR, of the laminated packaging material of the invention and the packages formed therefrom,
Fig. 8 is a diagram which shows how the package integrity of paper pouch packages comprising the heat sealable, pre-manufactured polyethylene film in its inside polymer layer configuration, is improved to withstand transport and rough handling by the laminated material,
Fig. 9a, 9b and 9c show schematic diagrams plotting the force versus deformation during the opening of a packaging container to drink from by a drinking straw, of a laminated packaging material comprising the heat sealable, load-bearing, pre-manufactured polyethylene film in its inside polymer layer configuration, as well as of a comparative laminated packaging material not comprising such a film,
Fig. 10a and 10b show further diagrams related to the total energy required for the opening of a packaging container to drink from by a drinking straw, of a laminated packaging material comprising the heat sealable, load-bearing, pre-manufactured polyethylene film in its inside polymer layer configuration, as well as of a comparative laminated packaging material not comprising such a film, and
Fig. 11a and 11b show diagrams related to the reduced tearing strength of the laminated packaging materials comprising the heat sealable, load-bearing, pre-manufactured polyethylene film in its inside polymer layer configuration.

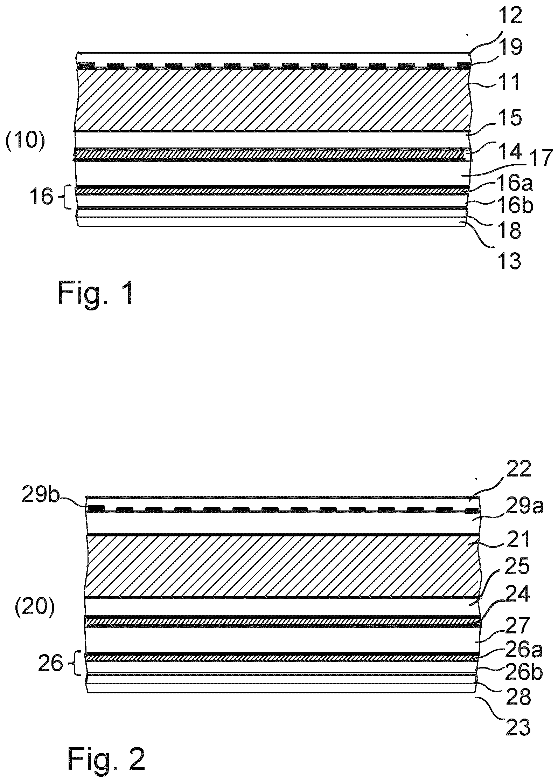

In Fig. 1, a laminated packaging material 10 for liquid carton packages is shown, in which the laminated material comprises a bulk layer 11 of paperboard, and further comprising a first, outermost liquid tight and protective layer 12 of low density polyethylene applied on the outside of the bulk layer 21, which side is to be directed towards the outside of a packaging container produced from the packaging laminate. The layer 12 is transparent to show the printed décor (décorative pattern) 19, applied onto the outside of the bulk layer, thus informing about the contents of the package, the packaging brand and other information targeting consumers in retail facilities and food shops. The outside surface of the paperboard 11 may have a printable pigment coating, a so-called clay-coat (not shown), onto which the printed décor 19 is applied. The polyethylene of the first, outermost layer 12 is a conventional low density polyethylene (LDPE) of a heat sealable quality, but could also include further similar polymers, such as LLDPEs. It is applied at an amount of from 8 to 12 g/m².

The inside of the bulk layer 11 is first coated with a flexible and equalizing base coating 15 of a clay-coat composition or similar composition, comprising from 25 to 96 weight-% of inorganic particles and from 4 to 75 wt-% of a polymer binder, per dry weight. Next, the base coated layer 15 is coated with two or three consecutive thin coatings of a first gas barrier layer 14, of polyvinyl alcohol, PVOH, or a dispersion coatable ethylene vinyl alcohol copolymer, EVOH, such as Exceval^{™} from Kuraray. Each applied dispersion coating is dried by hot air to evaporate the water from the coatings.

The thus barrier-coated and base-coated bulk layer 11 is laminated to a further barrier-coated polymer film 16 having an aluminium barrier deposition coating 16a, i.e. an aluminium-metallization coating, applied onto a substrate polymer film 16b by an intermediate bonding layer 17 of a low density polyethylene (LDPE).

The intermediate bonding layer 17 is formed by means of melt extrusion laminating a thin polymer melt curtain between the two paper webs and adhering it to the adjacent metallized polymer film on one side and to the adjacent barrier-coated bulk layer on the other side, as all three material webs pass through a cooled press roller nip. The amount applied of the intermediate bonding layer 17 is suitably from 12 to 20 g/m².

The metallization layer 16a is applied to the polymer film substrate 16b by physical vapour deposition, PVD, and has an optical density, OD, of about 2, or higher.

Preferably, the polymer film substrate 16b forms a first, innermost liquid tight and heat sealable layer in the laminated packaging material. Such a packaging material is suitable and working well for smaller packages and packages of less demanding geometries and uses, thanks to the heat sealability and integrity properties that the polymer film substrate 16b of the metallized polymer film 16 provides. The first, innermost liquid tight and heat sealable layer of the polymer film substrate 16b is thus to be in direct contact with a filled food product in a packaging container formed from the laminated packaging material.

In some cases, such as for larger size packaging containers of more than 500 ml filling volume, a further, second, innermost liquid tight and heat sealable layer or multilayer portion 13 may be additionally needed on the inner side of the metallized polymer film 16. In such cases the further and second innermost layer 13 will thus be in direct contact with the packaged product. The optional, further, second, innermost heat sealable layer 13, is then instead to form strong transversal heat seals of a liquid packaging container made from the laminated packaging material, and comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). This innermost layer of polyethylene may be applied at an amount from 10 to 30 g/m², such as from 10 to 20 g/m², such as from 10 to 15 g/m², and may be applied by coextrusion coating together with an optional intermediate layer of an adhesive polymer 18, such as an ethylene acrylic acid copolymer. The first, innermost liquid tight and heat sealable layer which is comprised on the inner side of the polymer film substrate 16b may still take part in the heat sealing of packaging containers, together with the further, second innermost layer 13, to form strong sealing joints and robust, large-size packages.

The innermost heat sealable layer 13 may be a multilayer portion, which consist of one layer or alternatively of two or more part-layers of the same or different kinds of LDPE or m-LLDPE or blends thereof.

In Fig. 2, a similar laminated packaging material 20, for liquid carton packaging, is shown, in which the laminated material comprises a similar paperboard bulk layer 21 as used in Fig. 1 (11), and further comprises a first, outermost, liquid tight layer 22 of LDPE, also applied on the outside of the bulk layer 21. In this case, however, the outside surface of the bulk layer does not have a printable pigment coating (clay-coat) but has instead a separate print-substrate paper 29a laminated to its outers side, onto which print-substrate paper a décor 29b may be printed.

The bulk layer 21 is laminated to the separate print-substrate paper 29a, by means wet lamination with an intermediate bonding layer (not shown) of an aqueous adhesive composition. Good bonding is obtained by applying an aqueous dispersion of a polyvinyl acetate adhesive, or a starch adhesive, onto one of the surfaces to be adhered to each other and subsequently pressing together in a roller nip. This lamination step is thus performed in an efficient cold or ambient lamination step at industrial speed without any energy-consuming drying operation needed to accelerate the evaporation of the water. The dry amount applied of the waterbased intermediate bonding layer is from 1 to 6 g/m² only, which entails that there is no need for drying or forced evaporation of the bonding layer. Accordingly it is possible to reduce the amount of the thermoplastic polymer fraction resulting from recycling processes, such as relatively thicker extrusion laminated polyethylene polymers, and to improve repulpability of the laminate packaging material in recycling processes, thanks to the use of aqueous emulsion or solution barrier coatings and adhesive formulations, which are readily re-dispersible in water and repulpable in the UBC (Used Beverage Carton) fibre recycling processes.

The inside layers of the laminated packaging material 20 are the same or similar to the inside layer configuration of the laminated material 10 in Fig. 1. Thus, a second innermost liquid tight and heat sealable layer 23 is arranged on the opposite side of the bulk layer 21, optionally together with an optional intermediate coextruded tie layer 28 at an amount of about 6 g/m², e.g. of ethylene acrylic acid copolymer (EAA) , as described above in Fig. 1. The inside of the bulk layer 21 is base-coated 25 and gas-barrier coated 24 in the same way and further laminated to a metallized polyolefin film 26, and may comprise an optional, second, innermost layer heat sealable and liquid tight polymer layer 23, to form a heat sealable and integrity-enhancing multilayer inside polymer configuration, comprising also the heat sealable and strong metallized polymer film substrate 26b.

According to a practical and cost-efficient embodiment, the laminated packaging material 20 is obtained by turning a conventional clay-coated liquid paperboard in the non-conventional direction, to let the clay-coat print substrate coating form the flexibel and equalizing base coating 25, while the absence of it on the outside is replaced with the separate print-substrate paper 29a, onto which the printed décor 29b may be applied.

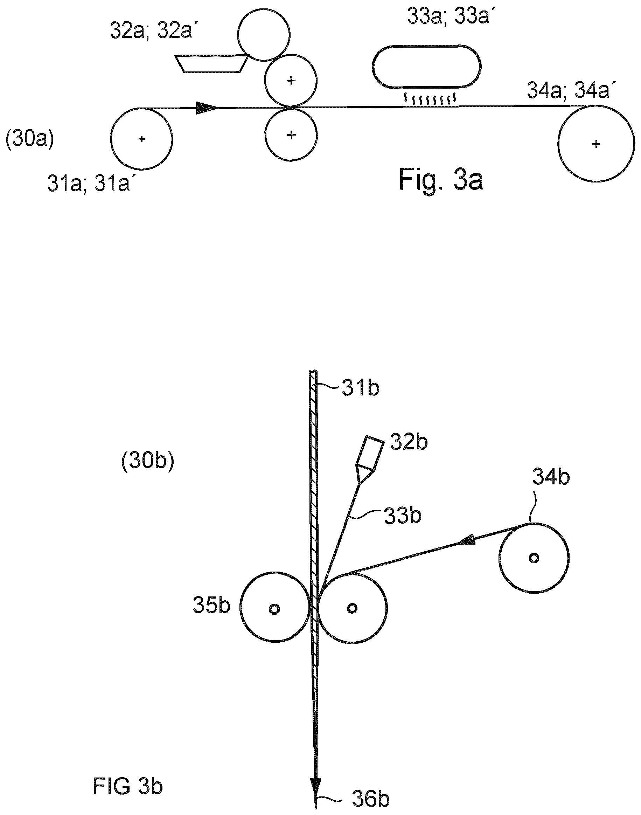

In Fig. 3a, an embodiment of a principal process of aqueous dispersion coating 30a is shown, which may be used for applying a first gas barrier coating 14; 24 from an aqueous oxygen gas barrier composition onto a paperboard bulk substrate, or for applying a flexible and equalizing base coating (however normally being of higher viscosity and requiring different equipment and settings). Alternatively, it may be used for applying an aqueous adhesive composition for wet laminating two webs together (without the drying), of which at least one web has a fibrous cellulose surface.

A web of paperboard 31a (e.g. the paperboard 11; 21 from Fig. 1 and 2, respectively, is thus forwarded to a dispersion coating station 32a, where an aqueous dispersion composition is applied by means of rollers onto the top surface of the substrate. The aqueous dispersion composition may have an aqueous content of from 80 to 99 weight-%, in the case of aqueous gas barrier compositions, thus there may be be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 33a, which also allows the moisture to evaporate and be removed from the surface of the substrate. The substrate temperature as it travels through the dryer, may be kept constant at a temperature of below 100 °C, such as preferably below 90 °C, such as from 70 to 90 °C, in order to avoid defects in the coating. Drying may be partly assisted by irradiation heat from infrared IR-lamps, in combination with hot air convection drying. For the coating of the flexible and equalizingbase coating, however, the aqueous content is much lower and then also the process of drying will be different.

A resulting web of a base-coated paper substrate may be smoothened by passing through a soft calender nip (not shown), and then be forwarded to cool off and further wound onto a reel for intermediate storage, to later be further subjected to gas barrier dispersion coating operations. Further coating operations may thus be further consecutive dispersion coating and drying operations of an aqueous gas barrier composition to provide the barrier-coated paperboard.

Fig. 3b shows a process 30b for the lamination step in the method for manufacturing of the packaging laminate 10; 20, when a web of the barrier-coated and base-coated bulk layer 31b; 11; 21 is extrusion laminated to a web of the metallized polymer film 34b; 16; 26 by melt extruding 32b a molten interjacent bonding layer 33b; 17a; 17b of a bonding polymer such as of a polyethylene, such as of LDPE, between the webs as the three material layers are forward into a lamination roller nip 35b between a press roller and a chilled counter roller, while the interjacent bonding layer solidifies by being cooled down and meeting the adjacent web surfaces on each respective side thus producing a pre-laminated material 36b.

In embodiments involving a separate print substrate paper laminated to the outside of the bulk layer, such lamination of bulk layer and separate print substrate paper may takes place in a prior step, before further lamination steps.

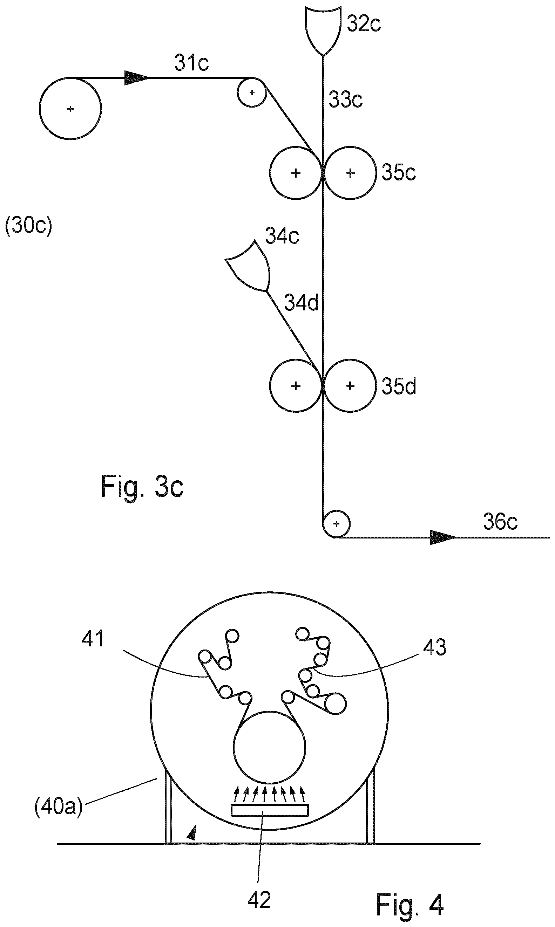

Fig. 3c further shows the process 30c for the final lamination steps in the manufacturing of the packaging laminate 10; 20, after that the barrier-coated and base-coated bulk layer 11; 21 has first been laminated to the metallized polymer film 34b; 16; 26 by melt extrusion lamination as described above.

The resulting paperboard-to-metallized-film, pre-laminated web 31c; 36b is thus forwarded from an intermediate storage reel, or directly from the lamination station for laminating the paperboard pre-laminate. The non-laminated side of the bulk layer 11; 21, i.e. its outside, is joined at a cooled roller nip 35c to a molten polymer curtain 33c of the LDPE, which is to form the first, outermost layer 12; 22 of the laminated material, the LDPE being extruded from an extruder feedblock and die 32c.

In an optional, further lamination step, the paperboard pre-laminated web 36b, now having the outermost layer 12; 22 coated on its outer or printed side, i.e. the outside, may pass a second extruder feedblock and die 34c and a lamination nip 35d, where a molten polymer curtain 34d is joined and coated onto the other side of the pre-laminate, i.e. on the inside of the metallized polyethylene film 16b; 26b. Thus, a second, innermost heat sealable layer or multilayer portion 13; 23 may be (co)extrusion coated onto the inner side of the paperboard-metallized-film pre-laminate web 36b, to form the finished laminated packaging material 36c; 10; 20, which is finally wound onto a storage reel, not shown.

The two coextrusion steps at lamination roller nips 35c and 35d, may alternatively be performed as two consecutive steps in the opposite order.

According to another embodiment, one or both of the outermost layers may instead be applied in a pre-lamination station, where the extrusion coated layer(s) is first applied to the outside of the (printed) bulk paperboard layer or onto the metallized film, and thereafter the two pre-laminated webs may be joined to each other, as described above.

According to a preferred method embodiment, the pre-manufactured polymer film substrate 16b; 26b of the metallized polymer film 16; 26 comprises the innermost layer(s) of the heat sealable and liquid-tight thermoplastic polymers, in which case a second extrusion coating step at the second lamination nip 35d will thus not be performed and needed at all.

Fig. 4 is a diagrammatic view of an example of a plant 40a for physical vapour deposition, PVD, of e.g. an aluminium metal coating, onto a web substrate of the invention. The base-coated and first gas-barrier coated, i.e. dispersion-coated paper substrate 41 is subjected, on its coated side, to continuous evaporation deposition 40, of evaporised aluminium, to form a metallised layer of aluminium. The coating is provided at a thickness from 5 to 100 nm, preferably from 10 to 50 nm, to form the metallized polyolefin film 43 of the invention. The aluminium vapour is formed from ion bombardment of an evaporation source of a solid piece of aluminium 42.

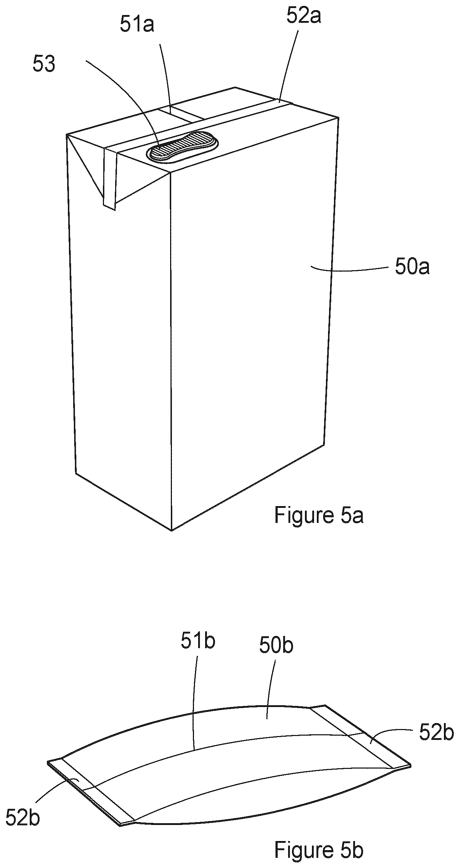

Fig. 5a shows an example of a packaging container 50a produced from the packaging laminate of the present invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still easy to handle and dimensionally stable enough to put on a shelf in the food store or on any flat surface.

Fig. 5b shows an alternative example of a packaging container 50b produced from an alternative packaging laminate of the invention. The alternative packaging laminate is thinner by having a thinner paper bulk layer, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

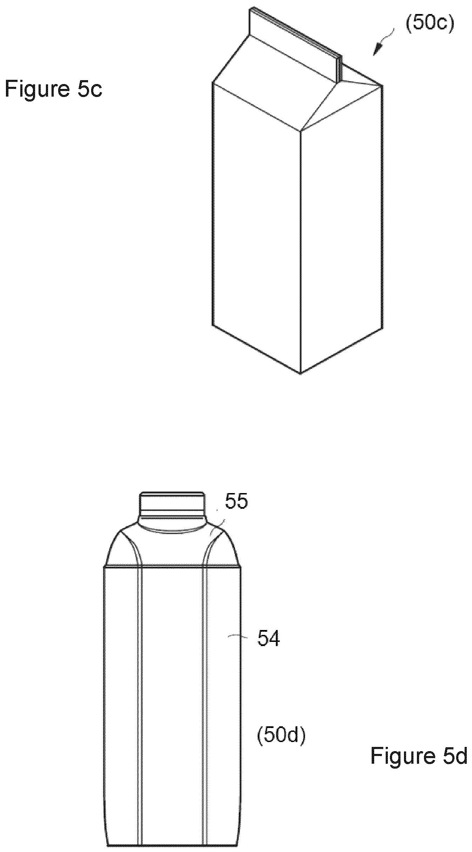

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blank of the laminated packaging material, and a top 55, which is formed by injection moulding plastics in combination with an opening device such as a screw cork or the like. This type of packages are for example marketed under the trade name of Tetra Top^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

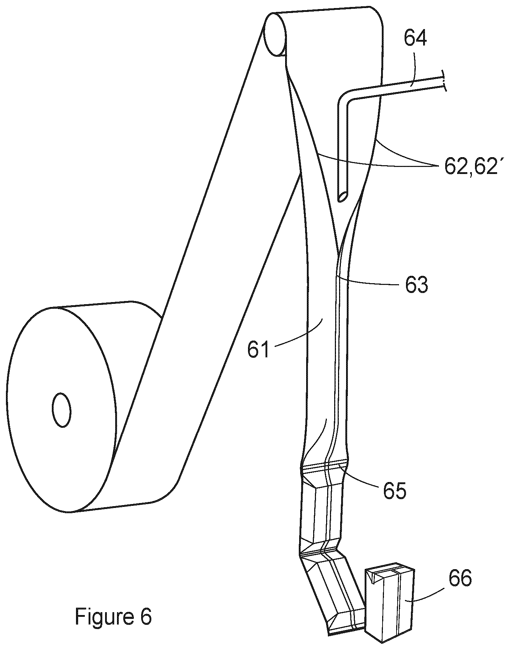

Fig. 6 shows the principle as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

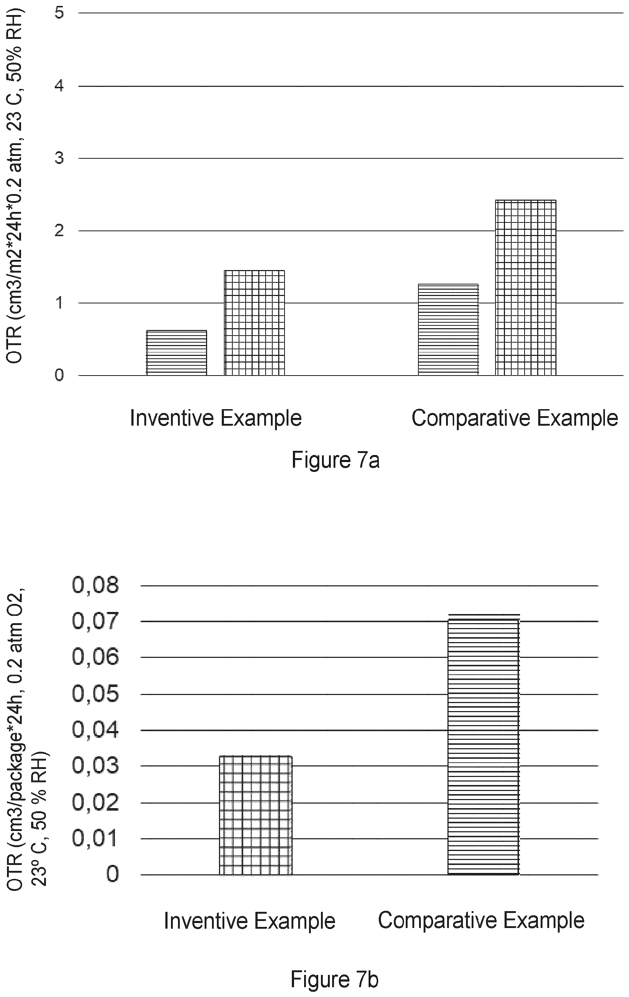

Fig. 7a shows the results of the measurements on flat laminated packaging material samples, the respective bars (striped) to the left showing the OTR values of non-creased materials, while the respective bars to the right (chequered) show the OTR values measured on samples of the same laminated packaging materials having one crease line applied per sample.

Fig. 7b shows the comparative results of OTR measurements on filled, emptied and dried packaging containers of the invention (left bar) vs of the comparative laminated material (right bar), thus covering also the influence that creasing and fold-forming and heat sealing of the material has on the results.

### Experiments

### Oxygen transmission measurements on laminates combining a metallized polymer film with a barrier-coated bulk layer

A base-coated bulk layer, i.e. conventional liquid paperboard, having a bending stiffness of 80 mN, coated with a mineral-filled latex (so-called clay-coat, CLC) composition, was further coated on its clay-coated side with an aqueous dispersion of PVOH at 1 g/m² dry weight (Poval^{™} 15/99 from Kuraray) in three subsequent coating operations with intermediate drying by forced evaporation of each applied coating layer. The total coated dry weight of PVOH was thus about 3 g/m². The thus barrier-coated paperboard was provided with a pattern of crease lines.

In a subsequent lamination operation, the coated surface of the thus PVOH-coated and base-coated paperboard was further laminated on its inside to an extrusion cast, 30 µm thick, metallized polyethylene film by melt extrusion lamination with an interjacent bonding layer of 20 g/m² LDPE.

The paperboard was extrusion coated on its opposite, outer side with 12 g/m² LDPE.

The final structure of the formed inventive laminate A was thus:
//Outside 12 g/m² LDPE / Duplex paperboard bulk 80 mN, 200 g/m² / CLC ca 22 g/m² / PVOH gas barrier coatings 3 x 1 g/m² / LDPE 20 g/m² / metallization OD ~2 / cast LLDPE film substrate, 30 µm //

The thus obtained laminated packaging material was tested for oxygen transmission rate (OTR) on flat material, both non-creased samples and samples having one crease line, and compared to a laminate having an identical laminate structure, made in the same way, except by the paperboard bulk layer being turned in the other direction such that the gas barrier layer of PVOH was coated directly on the un-coated inside of the paperboard instead. The latter, comparative material structure C was thus:
//Outside 12 g/m² LDPE/ CLC ca 22 g/m² / Duplex paperboard bulk layer 80 mN, 200 g/m²/ PVOH gas barrier coatings 3 x 1 g/m² / LDPE 20 g/m² / metallization OD ~2 / cast LLDPE film, 30 µm //

The oxygen transmission rate of planar samples of the two, compared laminated packaging materials A and C was determined as cm³/m²*24 h*0.2 atm 23 °C, 50 % RH by means of an Oxtran 2/21 (Mocon) equipment, in accordance with the official standard ASTM D3985 and ASTM F1927-14.

Fold-formed, filled and heat-sealed brick-shaped packaging containers were also produced from the laminated packaging materials in a Tetra Brik^{®} A3 Compact Flex filling machine, to produce Tetra Brik^{®} packages of the size and format 200 ml Slim (TBA200S).

The oxygen transmission rate of packages (filled, emptied and dried) was measured according to ASTM F1307-14, at 0.2 atm (surrounding air containing 21 % oxygen). The unit is cm³/package/24h, at conditions of 23 °C and 50 % RH.

For the OTR measurements of packaging containers, the packages were mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen leaks into the nitrogen gas inside the package.

**Table 1**

| Laminated packaging material | OTR flat samples according to ASTM F1927-14 | | OTR package according to ASTM F1307-14, at 0.2 atm (surrounding air containing 21 % oxygen). |
|---|---|---|---|
| | (cm³/m²*24 h*0.2 atm 23 °C, 50 % RH) | | |
| | | | (cm³/package*24h, 0.2 atm O2 at 23° C, 50 % RH) |
| | Non-creased paperboard | Creased paperboard (one crease line per sample) | Creased paperboard, fold-formed packaging containers |
| Inventive Example A 0.2 atm | 0.64 | 1.45 | 0.033 |
| Comparative Example C | 1.28 | 2.43 | 0.072 |

From the thus comparable OTR measurements, it can be concluded that the combination of a flexible and equalizing base coating beneath the thin dispersion-coated gas barrier coatings with a metallized polymer film on the inside of the gas barrier coatings, efficiently provides for excellent oxygen barrier properties of planar laminate samples as well as of fold-formed packaging containers from the creased laminated material. The oxygen transmission into a packaging container may be reduced to almost half of the comparative packaging container and the obtained OTR package values are on par with to those obtained when using advanced and expensive multicoated, barrier-coated substrate materials, for direct replacement of an aluminium foil, such as gas-barrier-coated polymer films or gas-barrier-coated, thin and flexible paper substrates. As seen in Table 1, the oxygen barrier of fold-formed packaging containers is much improved, although creasing deteriorates the inventive samples of planar materials to a notable extent.

It seems that the metallized film on the inside of the moisture-sensitive gas barrier coating thus can "repair" and reduce the impact of the damages to the oxygen barrier layer in the creased packaging laminate, in the final packaging container.

From other experiments, it has been seen that the oxygen barrier properties in a final package also improves by a factor of more than 20 with such a combined barrier laminate, compared to a packaging container from a same and comparable laminate, however without the metallized barrier coating, although the metallization coating did not contribute with much oxygen barrier itself.

### Examples using a specific, cast, biaxially oriented LLDPE film in the inside polymer layers of a laminated packaging material having a separate paper-based barrier

**Table 1: Properties of different pre-manufactured polyethylene films**

| Film sample ID / Film properties | | BO-F | A | B |
|---|---|---|---|---|
| | MD | 494 | 341 | 247 |
| Elastic Modulus (MPa), at 10 mm/min crosshead rate | CD | 539 | 579 | 358 |
| Tensile strength (Stress at break) (MPa), at 200 mm/min crosshead rate | MD | 52 | 49 | 36 |
| | CD | 129 | 38 | 32 |
| Elongation at break (Strain at break) | MD | 291 | 418 | 379 |
| (%) at 200 mm/min crosshead rate | CD | 67 | 760 | 715 |
| Seal initiation temp., SIT, (°C) at 2 N | | 90 | 105-110 | 100 |
| Maximum Hot Tack force (N) | | 8.6 | 6 | 4.5 |
| Puncture resistance Max load (N) | | 10 | 7 | 10 |
| Elongation at puncture (at max load) (mm) | | 8 | 18 | 24 |
| Film thickness (µm) | | 18 | 22 | 25 |

In a co-pending European patent application, No. 23186788, it has been shown that the cast and biaxially oriented LLDPE-based film BO-F, as shown in Table 1, and as used in the present invention, better fulfils the purpose of improving mechanical strength and package integrity, for liquid food packaging, in a laminated carton material including a pre-manufactured polyethylene film as an inside layer of the laminate. In particular, the specific type of film is mechanically tougher to resist folding strain in the transformation from flat laminated material into a liquid-filled, folded carton package. At the same time, the film is heat sealable to create good heat seals of high integrity, which adds to the total integrity of a filled packaging container, and importantly, it is thinner than expected in relation to its mechanical properties. Partly, due to the film being thin and thanks to its combined set of mechanical properties, the film is easier to penetrate or to tear open than previous pre-manufactured films of the prior art. This is important for various kinds of consumer openings of carton packages for liquid food. The findings in the co-pending European patent application, No. 23186788 are included herein as background examples 1 and 2, each with comparative examples to show the technical success of the specific polymer film, used as polymer film substrate for the metallized polymer film of the present invention.

The biaxially oriented film BO-F, as shown in Table 1, is thus a pre-manufactured film (SealTOUGH 18XE400 manufactured by Jindal Films) from primarily LLDPE and LDPE, with LLDPE as a major polymer component at above 60 weight-%, extrusion cast and subsequently oriented in both MD and CD, i.e. by biaxial orientation. The film is only 18 µm thick including a few microns thick heat sealable skin layer on its free surface side (towards the inside of a packaging container) comprising m-LLDPE, the degree of orientation being high both in the machine direction, MD, and in the cross direction, CD. The film has a co-oriented skin layer also on its other side, with a polymer composition different from the core layer. This other skin layer is not needed for the invention but is present mostly for layer symmetry to facilitate in the extrusion casting and subsequent biaxial orientation operations. No tie layers are present.

The standard measurement methods of this application are different from the Jindal internal measurement methods specified in their data sheets, meaning that the values do not correspond exactly.

### Background Example 1

### Successful background laminate 1:

A laminated material was produced having the following principal structure:
/LDPE/ paperboard //LDPE/mLLDPE/LDPE/-coextrusion// paper substrate/ PVOH/ metallisation/ EAA adhesive/ LDPE/ biaxially oriented LLDPE film BO-F /

The biaxially oriented film BO-F was a pre-manufactured film (SealTOUGH 18XE400 manufactured by Jindal Films) from primarily LLDPE and LDPE, with LLDPE as a major polymer component at above 60 weight-%, extrusion cast and subsequently oriented in both MD and CD, i.e. by biaxial orientation. The film was only 18 µm thick with a few micron thick heat sealable skin layer on its free surface side (towards the inside of a packaging container) comprising m-LLDPE, the degree of orientation being high both in the MD and in the CD. The film had a co-oriented skin layer also on its other side, with a polymer composition different from the core layer. This other skin layer is not needed for the invention but is present mostly for layer symmetry to facilitate in the extrusion casting and subsequent biaxial orientation operations. No tie layers were present.

The standard measurement methods of this application are different from the Jindal internal measurement methods specified in the SealTOUGH data sheet, meaning that the values do not correspond exactly.

The bulk layer, i.e. the paperboard, was laminated to the barrier coated thin paper substrate by melt extrusion lamination with an interjacent bonding layer of 15 g/m² LDPE or by a three-layer coextrusion configuration of /LDPE/ mLLDPE/ LDPE/ with 5 g/m² in each layer. The biaxially oriented LLDPE film BO-F was further laminated to the other side of the barrier-coated paper substrate by melt extrusion lamination of a co-extrusion of a tie layer of 6 g/m² adhesive EAA polymer together with about 13 g/m² of a bonding layer of LDPE, to form an interjacent bonding layer portion, with the EAA adjacent to the barrier-coated paper and the LDPE adjacent to the biaxially oriented LLDPE film BO-F.

### Comparative laminate 1A:

A laminated material was produced having the same principal structure as the Successful background laminate 1, except for using a pre-manufactured, blown LLDPE film A :
/LDPE/ paperboard //LDPE/mLLDPE/LDPE/-coextrusion// paper substrate/ PVOH/ metallisation/ EAA adhesive/ LDPE/ Blown LLDPE film A /

The blown LLDPE film A was pre-manufactured by a film blowing process as a single-layer film of 22 µm thickness and comprising about 80 wt-% of LLDPE and about 20 weight-% LDPE.

The same paperboard was laminated to the same barrier-coated thin paper substrate, as in Successful background laminate 1, by melt co-extrusion lamination with an interjacent bonding layer portion of a three-layer configuration of /LDPE/ mLLDPE/ LDPE/ at 5 g/m² each. The blown film A was further laminated to the other side of the barrier-coated paper substrate by melt extrusion lamination of a co-extrusion of 6 g/m² adhesive EAA polymer together with about 13 g/m² of LDPE, to form an interjacent bonding layer portion with the EAA adjacent the barrier-coated paper and the LDPE adjacent the blown LLDPE film A.

### Comparative laminate 1B:

A laminated material was produced having the same principal structure as the Successful background laminate 1, except for using a pre-manufactured, blown LLDPE film B/:
/LDPE/ paperboard/ LDPE/ paper/ PVOH/ metallization/ EAA adhesive/ LDPE/ Blown LLDPE film B /

The blown LLDPE film B was pre-manufactured by a film blowing process into a three-layer film of 25 µm thickness, from primarily LLDPE and LDPE, with LLDPE as a major polymer component at above 60 weight-%, and with a layer of an adhesive polymer of ethylene acrylic acid copolymer, EAA, the core layer comprising about 80 weight-% of LLDPE.

The same paperboard was again laminated to the same barrier-coated thin paper substrate, as in Successful background laminate 1, by melt co-extrusion lamination with an interjacent bonding layer portion of a three-layer configuration of /LDPE/ m-LLDPE/ LDPE/ at 5 g/m² each. The blown film B was further laminated to the other side of the barrier-coated paper substrate by melt extrusion lamination of a co-extrusion of 6 g/m² adhesive EAA polymer together with about 13 g/m² of LDPE, to form an interjacent bonding layer portion with the EAA adjacent the barrier-coated paper and the LDPE adjacent the blown LLDPE film B.

The detailed structure of the above laminated materials are as shown in Table 2.

**Table 2**

| Packaging laminate layers | Successful background laminate 1 | Comparati ve laminate 1A | Comparative laminate 1B |
|---|---|---|---|
| Outermost protective layer: LDPE 12 g/m² | | | |
| Bulk layer: Liquid Paperboard, 80 mN Duplex, 200 g/m² | | | |
| Lamination layer: LDPE 15 g/m² or 3-layer: 3x 5 g/m² /LDPE/ mLLDPE/ LDPE/ | /LDPE/ mLLDPE/ LDPE/ | /LDPE/ mLLDPE/ LDPE/ | /LDPE/ mLLDPE/ LDPE/ |
| Paper barrier: paper substrate 39 g/m² | | | |
| Barriers: ~1.5 g/m² PVOH; metallization OD ~2 | | | |
| Adhesive polymer: EAA 6 g/m² | | | |

| Bonding layer: LDPE 13 g/m² | | | |
|---|---|---|---|
| Innermost heat sealable pre-manufactured polyethylene film, LLDPE-based | Biaxially oriented film BO-F, major part LLDPE, core with thin skin layers | Blown film A; | Blown film B; 3-layer, /4/15/6/ µm, /LLDPE/ (80 LLDPE: 20 LDPE)/ EAA/ |
| | | 1-layer, (LLPDE 80: LDPE 20) | |
| | Thickness 18 µm | Thickness 22 µm | Thickness 25 µm |

The exemplified packaging materials of Table 2 are thus non-foil packaging materials for liquid carton packaging, which have thin, delicate oxygen barrier coatings, and which are generally more vulnerable to stress and strain, than similar laminate materials with an aluminium foil as the oxygen barrier.

### Package and packaging material integrity

Packages were produced from the packaging laminates in table 2 and filled with water in a Tetra Pak^{®} A3/CompactFlex filling machine. This type of filling machine has the capacity to fill portion packages at a speed of 9000 packages/hour and a flexibility that allows for quick change between different package formats. Packages were in the format of Tetra Brik^{®} with a volume of 200 ml. Packages were subsequently emptied, unfolded and studied at the areas of the inside of the laminate, which were exposed to maximal mechanical stress during the filling and forming operations. At these areas, the laminated material has typically been severely stressed by multiple folding, and an example of such a location of a Tetra Brik^{®} package is at the bottom corner flaps.

The one or more polymer layer(s) on the inside of the metallization coating, i.e. on the side directed towards the filled product, were studied by X-ray tomography at these areas of each package. X-ray tomography is an imaging technique that allows to distinguish between the various layers of the laminate, meaning that we can resolve and quantify the thickness of the pre-manufactured polyethylene films and of the inside polymer layers altogether.

Thus, the double-folded areas were evaluated to one of three levels depending on average frequency and size of small weakenings and imperfections, so-called defect initiations, in the inside polymer layers. Although there were no or hardly any actual defects seen in the inside polymer layers, in any of the studied laminates and packages, the evaluation of the initiations, i.e. of potential, later appearing defects upon severe further stress and strain of the filled packages, provides an overview of the potential risk for eventual leakages or un-tightness to occur. The evaluation levels were:
1 = Approved, low level of polymer thinnings and defect initiations as visible by X-ray analysis, ("OK")
2 = Higher approved level of polymer thinnings and defect initiations as visible by X-ray analysis, still within safety margin to prevent potential actual defects to develop, ("Acceptable")
3 = Not approved level of polymer thinnings and defect initiations as visible by X-ray analysis, i.e. not within safety margin to prevent potential actual defects to develop under severe circumstances ("Not acceptable")

**Table 3**

| X-ray tomography study of defect initiations in inside polymer layers; | Successful background laminate 1 | Comparativ e laminate 1A | Comparative laminate 1B |
|---|---|---|---|
| evaluation level 1-3 | | | |
| Level 1 | 95.6 % | 24.3 % | 73.3 % |
| Level 2 | 4.4 % | 72.5 % | 26.7 % |
| Level 3 | 0.0 % | 3.2 % | 0.0 % |

Furthermore, the metallization coating of the paper barrier structure was evaluated by visible inspection of the double-folded areas with the aid of a magnifying instrument. For this evaluation, a Peak instrument N2044 at magnification of 16 times was used, providing a resolution and precision of 0.1 mm. Table 4 shows the evaluation of very fine defect lines or crack initiations, in the metallization.

**Table 4**

| Defect lines at area of multiple folding in 100 packages | Successful background laminate 1 | Comparative laminate 1A | Comparative laminate 1B |
|---|---|---|---|
| Number of defect lines having a width at most 0.3 mm | 100 % | 91 % | 97 % |
| Number of defect lines having a width above 0.3 mm, at most 0.5 mm | 0% | 9% | 3% |
| Number of defect lines having a width at most 0.5 mm | 0% | 0% | 0% |
| Max value width of defect line (mm) | 0.2 | 0.5 | 0.4 |

Thus, it may be concluded that the successful laminated material has an improved mechanical robustness, such that there is a better safety margin for package integrity, meaning that the inside polymer layers will stay intact and protect the filled contents throughout the storage, distribution and lifetime of the packages. This improved robustness of the inside polymer layers also seems to protect the sensitive barrier coatings in the paper barrier material in an improved manner.

### Tear opening test

The tearing strength according to ISO 1974 (the Elmendorf test) is the force required to continue the tearing started by an initial cut in a piece of a sample sheet to be tested and is expressed in mN. The measurement is normally adapted for paper and paperboard testing but can be used also for laminate materials comprising paper or paperboard, regarding measurement of required tearing force.

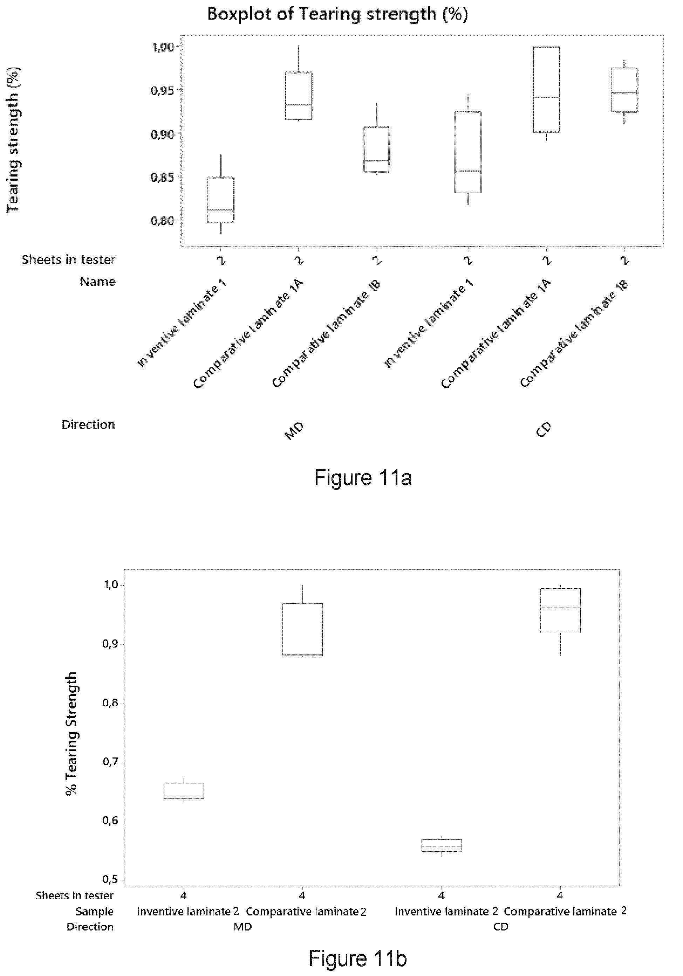

Thus, the results from testing of tearing strength according to ISO 1974 (the Elmendorf test) of the Successful background laminate 1 vs Comparative laminates 1A and 1B are as shown in the diagram in Figure 11a (in the MD and CD, respectively). The diagram shows relative values vs a highest measured value for the tested laminates and thus reflect the relative difference of properties between the successful laminate (Successful background laminate 1) and the Comparative laminates 1A and 1B.

Successful background laminate 1 exhibited significantly lower tear strength than Comparative laminate 1A and Comparative laminate 1B in both the MD and CD directions.

This confirms the results of consumer-panel testing of the tear opening capability of these materials, i.e. openability upon tearing the material open, such as for packages having a weakening notch or another weakening such as a tear opening perforation. Thus, the Successful background laminate 1 was also perceived easier to tear open, than the Comparative laminate 1A and the Comparative laminate 1B.

### Total Energy of penetrating a pre-cut, laminated hole with a drinking-straw

The tested laminated materials were during manufacturing and converting operations foreseen with pre-cut, laminated straw holes, one per each package unit. Thus, the bulk layer of paper or paperboard was pre-cut at intervals to obtain one small hole per package unit, having a diameter of 6 mm, suitable for an opening for a drinking straw. In the subsequent lamination operations, to form the laminates that were tested herein, these straw holes were over-laminated, i.e. covered by all the other layers of the laminate. Within the paperboard hole area, the outermost LDPE layer is adhered to the LDPE lamination layer and thus forming a laminated membrane together with the paper barrier and the inside polymer layers, including also the innermost pre-manufactured polyethylene film.

In an internal experiment, a standard compression testing machine (Zwick Roell) was used to evaluate the total energy required for opening the membrane by penetration with a slant-cut metal straw, with similar dimensions as the plastic and paper straws normally used by consumers for opening of portion packages. The purpose of testing with a metal straw, was to eliminate the influence from variations of soft and more flexible slant-cut tips of single-use drinking straws. It was seen that approximately the same total energy (the total area below the measured force curve) was needed for the Successful background laminate 1 and the Comparative laminate 1A. However, as earlier consumer panel tests had more clearly indicated better straw openability for the Successful background laminate 1, this was further investigated to be measured.

It was thus seen that the plotted shape of the required penetration force, i.e. the appearance of the deformation curves, were different between the two laminates, both in MD and CD of the Successful background laminated material.

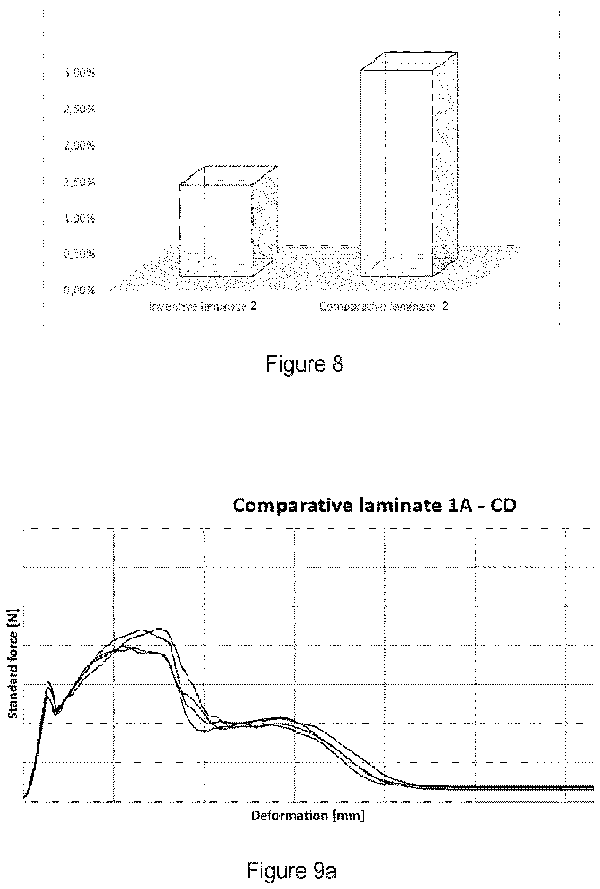

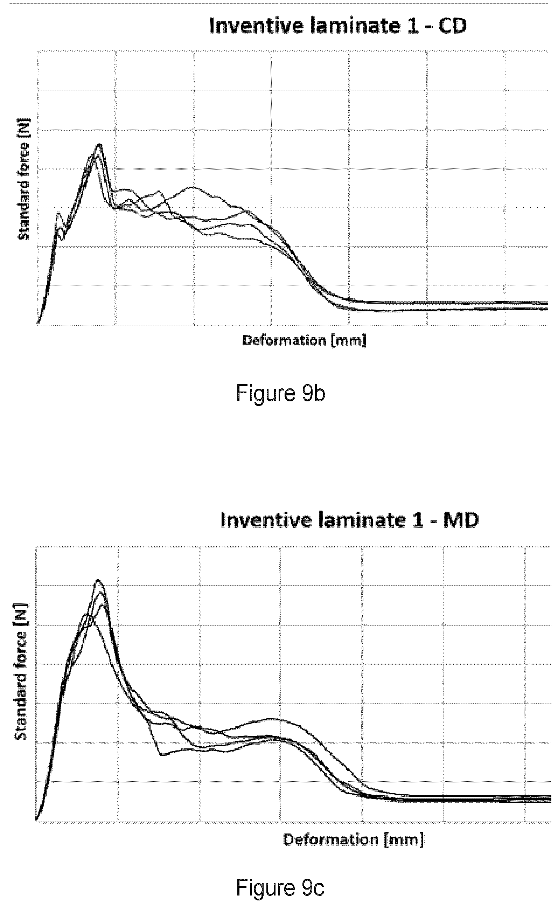

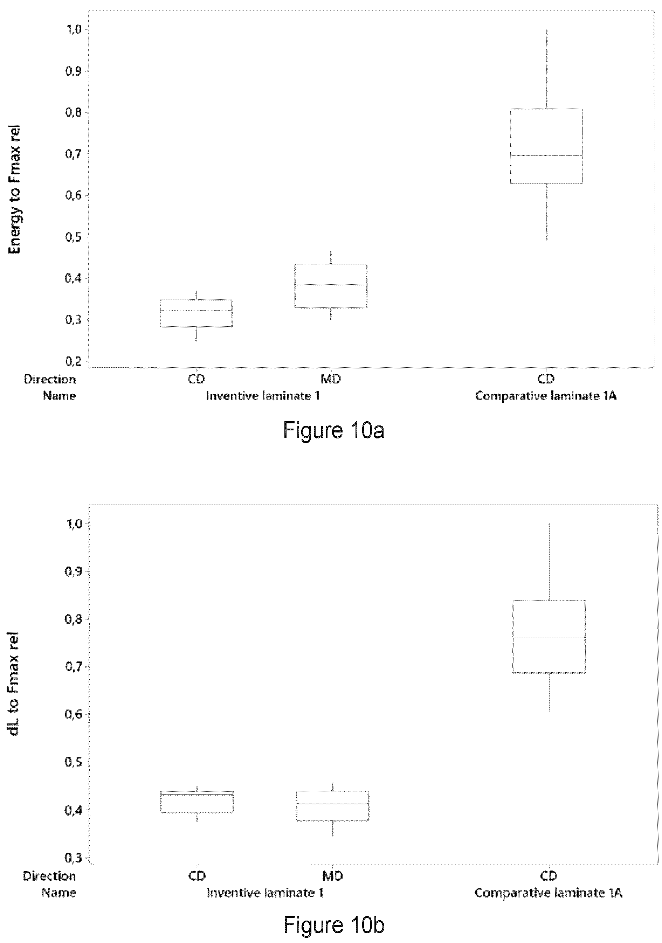

As shown in the diagrams of Fig. 9b and 9c, the plotted force reaches its maximum before penetration much quicker in the Successful background laminate 1 than in the Comparative laminate 1A (Fig. 9a). This may explain the results from the test panel, i.e. that it was easier to open the straw hole with a straw, in the Successful background laminate 1. It is believed that the more distinct pushing-through of the membrane of the hole by the drinking straw, happening directly upon pressing the straw against the membrane, provides this opening experience, although the total force needed at the moment of penetration may be equally high or even higher. In the CD, the required force was measured to be lower, however, with the Successful background laminate 1. This is further illustrated in the diagram of Figure 10a, at measuring the energy required to reach the maximum force, "F-max", i.e. the force measured just before penetration of the membrane, and in the diagram of Figure 10b, at measuring the increase dL of the force up to "F-max", which is steeper with the Successful background laminate 1, thus providing a feeling of quicker, more directly "responding", penetration and opening. The diagrams show relative values vs a highest measured value for both laminates and thus reflect the relative difference of properties between the successful laminate (Successful background laminate 1) and the Comparative laminate 1A.

To conclude, also in the case of a straw opening or a pre-cut hole-membrane penetration opening mechanism, the openability is significantly improved by the Successful background laminate 1, despite the fact that the specific pre-manufactured polyethylene film is also much improving packaging integrity and mechanical robustness of the laminated material.

### Background Example 2

### Successful background laminate 2:

A laminated packaging material was produced having the structure:
/LDPE/ paper for pouch packaging laminate, (0 mN) 72 g/m²/ LDPE/ Aluminium foil/ EAA adhesive/ LDPE/ innermost biaxially oriented polyethylene film BO-F/

The biaxially oriented polyethylene film BO-F was the same pre-manufactured film as described in Example 1 above.

A different bulk layer, i.e. a paper of about 72 g/m², having no inherent bending stiffness and intended for production of paper pouch packages rather than fold-formed, cuboid packaging containers as in Example 1, was laminated to the aluminium foil by melt extrusion lamination with an interjacent bonding layer of 15 g/m² LDPE. The biaxially oriented LLDPE film BO-F was further laminated to the other, inner side of the aluminium foil by melt co-extrusion lamination of a tie layer of 6 g/m² adhesive EAA polymer together with about 13 g/m² of a bonding layer of LDPE, to form an interjacent bonding layer portion, with the EAA adjacent to the aluminium foil and the LDPE adjacent to the biaxially oriented LLDPE film BO-F.

### Comparative laminate 2:

A laminated material was produced having the structure:
/LDPE/ paper 72 g/m²/ LDPE/ Aluminium foil/ blown polyethylene film B/ EAA adhesive polymer/ innermost blend of 70 weight% mLLDPE + 30 weight-% LDPE/

The blown LLDPE film B was the same as in Successful background Example 1, in the Comparative laminate 1B.

The same bulk layer, i.e. the paper of about 72 g/m², was laminated to the same aluminium foil as in Successful background aminate 2, by melt extrusion lamination with an interjacent bonding layer of LDPE at about 15 g/m². The blown film B was simultaneously laminated to the other side of the aluminium foil by heat pressure lamination of the foil to the film, which has an adhesive layer of EAA turned towards the aluminium foil. A subsequent co-extrusion onto the other side of the film, of 6 g/m² adhesive EAA polymer together with about 19 g/m² of a blend of 70 weight-% mLLDPE and 30 weight-% LDPE to form an innermost layer, heats the inside layer portion more and longer time, such that the adhesion of the blown film to the aluminium foil improves further.

The detailed structure of the above laminated materials are as shown in Table 5.

**Table 5**

| Packaging laminate layers | Successful background laminate 2 | Comparative laminate 2 |
|---|---|---|
| Outermost protective layer | LDPE 12 g/m² | LDPE 12 g/m² |
| Bulk layer | Liquid Paper bulk, 72 g/m² (0 mN) | Liquid Paper bulk, 72 g/m² (0 mN) |
| Lamination layer | LDPE 15 g/m² | LDPE 15 g/m² |
| Barrier layer | Aluminium foil 6.3 µm | Aluminium foil 6.3 µm |
| Inside layer 1 | EAA adhesive polymer | Blown film B |
| | 6 g/m² | 3-layer, /4/15/6/ µm, /LLDPE/ (80 LLDPE: 20 LDPE)/ EAA/ |
| | | Thickness 25 µm |
| Inside layer 2 | Bonding layer | EAA adhesive polymer |
| | LDPE 13 g/m² | 6 g/m² |
| Innermost layer; inside layer 3 | Biaxially oriented LLDPE film BO-F | 70:30 |
| | | mLLDPE : LDPE |
| | Thickness 18 µm | 19 g/m² |

The structure according to Comparative laminate 2, has been the state of the art since years and is seen as the most robust and mechanically strong packaging laminate for paper pouch packaging material. Other pre-manufactured films and configurations were tested over time, but nothing better was found. The strain and stress on the packaging material for such pouch packages (marketed as Tetra Fino^{®} Aseptic) is extraordinary, while the package concept is targeting emerging economies and low-cost segments.

Thus, pouch packaging containers were produced from the laminated materials in Table 5, in a Tetra Pak^{®} A1 filling machine. This type of filling machine has the capacity to fill portion pouch packages at a speed of about 12000 packages/hour. The packages were thus in the format of Tetra Fino^{®} Aseptic, having a volume of 250 ml.

### Transportation test

An adapted vibration and transportation test was used for the purpose of evaluating how such pouch packages can withstand transport, handling and distribution. The vibration test method thus simulates the transportation and distribution of packages. The vibration test is performed according to ASTM D 4728-17: "Standard test Method for Random Vibration Testing of Shipping Containers" and follows a standard vibration cycle program "Level 1" which lasts 45 minutes. Before testing, the pouch packages were packed into secondary carton packages in a standardized manner, with 24 pouches in each secondary carton package. The thus packed distribution cartons were altogether conditioned in a climate chamber until stable temperature and humidity was reached and then placed on a distribution pallet in a further standardized manner, counting 7 layers of secondary cartons stacked on top of each other.

Defects emerge especially at the side panels in the laminated material during re-shaping from a cylindrical tube to pillow-pouch-shape packages. This transformation cannot be carried out geometrically without the formation of some deformations or wrinkles. Such deformations are initial weak points for propagation of fatigue during distribution and handling, and there is a risk that they may eventually transform into defects in the barrier layers and in the seals of the packages.

The vibration test was chosen to cause a certain level of failure in the pouch packages, i.e. of leakage of the filled water content. The number of leaking packages was counted after the thus applied vibration test. Furthermore, the damaged packages may within such a test be classified into different levels of severity of the damages, and further studied regarding details and nature of the damages. The percentage of leaking packages was evaluated.

The result from comparing packaging containers made from Successful background laminate 2 and from Comparative laminate 2 is shown in the diagram in Figure 8. It shows that a significantly improved packaging material has now been developed, which can reduce leakages from 3.5 to 1.75 leaking containers per 100, i.e. a reduction by 50 %.

This result was truly surprising, as the packaging material did not have to become thicker at the same time by the addition of more polymer, but rather the opposite.

### Tear opening test

The tearing strength was measured also on samples of the laminates in Table 5, in the same manner as was done on the laminates tested in Example 1, but since the laminated material in this case was thinner the test was performed on a total of four layers of the laminates in Table 5. The tearing strength is the force required to continue a tearing initiated by a small cut in a sample test piece, as measured according to the Elmendorf test, ISO 1974, and is expressed in mN.

The results from comparing the Successful background laminate 2 to Comparative laminate 2 are as shown in the diagram of Figure 11b.

Those results show that, at the same time as the Successful background laminate 2 has become significantly more robust to support the integrity of the pouch packages filled and sealed therefrom, it has also become much easier to open, as shown by the tear openings tests, evaluated in the same way as described above in connection to Example 1. The diagrams show relative values vs a highest measured value for both tested laminates and thus reflect the relative difference of properties between the successful laminate (Successful background laminate 2) and the Comparative laminate 2.

Successful background laminate 2 exhibited significantly lower tear strength than Comparative laminate 2 in both MD and CD directions.

This also confirms test results with consumer test panels that evaluated the openability of pouch packages of the successful laminate and according to the state of the art. Such panel assessments had established that the pouches from Comparative laminate 2 were in fact not possible to open by tearing, even with the aid of a notch in the material, but had to be cut open by scissors, whereas the pouches from Successful background laminate 2 were readily openable by tearing.

### Conclusions from Background Examples 1 and 2

The laminated packaging materials of the examples have several advantages.

They exhibited significantly improved package integrity, in that the laminated barrier and inside layers remained well beyond sufficiently intact, despite multiple folding and severe stress in the fold-forming into filled and heat-sealed packages, and in that they endured severe transport and vibration simulation tests for pouch packages. At the same time, significantly improved openability of the laminated packaging materials was proven by tear strength tests and tests regarding the total energy behaviour upon opening with a drinking straw.

It is a true achievement to improve such fundamentally contradicting properties, as package strength and integrity on the one hand, and package openability on the other hand, in a liquid carton laminate. This is beyond normal optimization work, which normally would mean some trade-off and compromise, regarding one type of property or the other, or both.

Generally, such improved contradicting properties further enables increased exploitation of more demanding package formats, such as large-size packages, pouch packages, fold-formed packages involving more severe folding points and more. This is an important advantage, in that different consumer needs may be reflected in more tailor-made packages for different purposes and desires.

Gas barrier properties were ensured to be protected in foldable carton-based laminated materials without the use of thick metal foils, such as the conventional aluminium foil, thus enabling mechanically robust, high performing sustainable packaging materials for aseptic, ambient, long-term storage of liquid food products.

Such materials are more sustainable to the environment and the climate by requiring less carbon dioxide in manufacturing processes, and by simplifying recycling processes, such that only one type of polymer (polyolefin/polyethylene) is used in addition to the cellulose fibres. There will thus be a minimal amount of reject comprising other materials than polyethylene and cellulose. Simplified recycling processes are a pre-requisite for a sustainable, circular economy of materials.

### Example with laminated packaging material having an additional extrusion coated innermost layer and a separate paper-based barrier

### Successful background laminate 3:

A laminated material was produced having the following principal structure:
//LDPE 12 g/m²/ paperboard 260 mN / LDPE 8 g/m² / paper substrate / PVOH / metallization / EAA adhesive 6 g/m²/ LDPE 13 g/m²/ biaxially oriented LLDPE film "BO-F" 17 g/m² / innermost heat sealable blend of 70 wt% mLLDPE and 30 wt% LDPE, 16 g/m² //

The biaxially oriented film BO-F was the pre-manufactured film (SealTOUGH 18XE400 manufactured by Jindal Films). The bulk layer, i.e. the paperboard, was a paperboard from Billerud, Sweden, of 260 mN (GM, geometrical mean) bending stiffness, as used for larger package formats, such as 1-litre packages for family consumption. The paperboard had a printable pigment coating (clay-coat) on its outer side and was laminated to the barrier coated thin paper substrate by melt extrusion lamination with an interjacent bonding layer of about 8 g/m² LDPE. The biaxially oriented LLDPE film BO-F was further laminated to the other, inner side of the barrier-coated paper substrate by melt extrusion lamination of a co-extrusion of a tie layer of 6 g/m² adhesive EAA polymer together with about 13 g/m² of a bonding layer of LDPE, to form an interjacent bonding layer portion, with the EAA adjacent to the barrier-coated surface of the paper substrate and the LDPE layer adjacent to the biaxially oriented LLDPE film BO-F. A further, innermost layer was extrusion coated onto the free, inside surface of the film BO-F, comprising a blend of about 70 wt% m-LLDPE and about 30 wt % LDPE.

The barrier coated paper was separately made by coating a thin Kraft paper of 39 g/m² with two dispersion coating layers of PVOH with intermediate and subsequent dryings, each of about 0.7-0.8 g/m² of PVOH, thus to a 1.5 g/m² total PVOH dry gas barrier layer. The PVOH layer was subsequently vapour deposition coated by an aluminium metallization coating to an optical density (OD) of about 2.0.

### Comparative background laminate 3:

A comparative laminated material was produced having the same principal structure, using the same materials, and being laminated in the same way, as described regarding Successful background laminate 3, except that it was omitted to extrusion coat a further innermost layer. Instead, the BO-F film itself was to constitute the innermost layer of the laminated packaging material, as would be the case for a corresponding laminated material intended for a small package, such as a 200 ml portion package, and having a thinner paperboard having a lower bending stiffness.
//LDPE 12 g/m²/ paperboard 260 mN / LDPE 8 g/m² / paper substrate / PVOH / metallization / EAA adhesive 6 g/m²/ LDPE 13 g/m²/ biaxially oriented LLDPE film "BO-F" 17 g/m² //

Packages were produced from the Inventive laminate 3 and the Comparative laminate 3 and filled with water in a Tetra Pak^{®} A3/Flex filling machine. The packages were in the format of Tetra Brik^{®} with a volume of 1000 ml. This type of filling machine works according to the tube filling concept, according to which a vertical tube is continuously forwarded, while being longitudinally heat sealed and filled with liquid food, at the same time as intermittent, transversal heat seals are formed to seal the tube below the liquid surface level. Pillow-shaped packages are thus cut off from the tube in a synchronized manner with the formed transversal seals. After the cut, the pillow-shaped packages are further folded to obtain the final package shape. The filling machine has the capacity to fill family packages at a speed of up to 8000 packages/hour and a flexibility that allows the change between different package formats. The tube was longitudinally heat sealed by conventional hot air sealing, while the transversal heat seals of the tube, to form individual packages, were made by ultrasonic heat sealing.

The robustness of the heat sealing process was evaluated by exploring the so-called "sealing window", within which the heat sealing operation worked without problems, i.e. by exploring at which heat sealing power settings of the filling machine the laminated packaging material was able to provide a good heat seal, such that tight and defect-free packages could be produced. At lower supply of energy to the heat sealing jaws, which are pressing the tube walls together to a flat double-folded structure and heat sealing the adjacent inside layers to each other along a linear, transversal seal region across the tube, there is increasing risk that the heat sealing zone on the material remains too cold for the heated inside polymers to melt fuse, or weld, properly across the interface of the sealable surfaces, in order to produce strong heat seals or bonds, with risk for untight or leaking packages as the result. At higher energy supply there is instead a risk for over-heating the materials in the materials within the heat sealing areas, such as to provide burn marks on the paperboard, and to melt through and squeeze away the polymer layers from the heat seal. Accordingly, at higher energy supply, there is also an increased risk for resulting untight, or leaking packages.

The results from this exploration of the sealing windows are shown in Table 6. The heat sealing performance at various settings, to varied levels of energy supplied to the sealing jaws, is graded and provided per left and right sealing jaw, and per the respective top and bottom heat sealing elements.

It was concluded that the heat sealing window of energy settings, at which good heat sealing may be performed, was expanded ("widened"), towards the higher supply of energy, as packages were filled and sealed in the filling machine, from the Inventive laminate 3. Inventive laminate 3 was accordingly more robust and less sensitive to a need for sealing conditions needing more energy, such as with demanding package formats and thick paperboard materials, such that the heat sealing process is less sensitive to increased energy supply.

The higher amount of heat sealable polymer on the inside of the paper barrier supports the total integrity of the packaging container although it is also to a great degree relying on the use of the heat sealable, integrity-improving pre-manufactured film. It was expected by Applicant that the heat sealing process would have to be slowed down due to the higher amount of polymer to be sealed, but this was not experienced. On the contrary, the heat sealing process could be kept at a normal level and higher strength was provided to the heat seals, which contributes to avoid untight packages. The successful background laminate 3 was clearly more robust in providing safe and reliable packaging containers of the larger format of one litre.

**Table 6**

| | | | | USTS energy (J) | | | | | | | | |
|---|---|---|---|---|---|---|---|---|---|---|---|---|
| Packaging Material | Jaw | Base | 180 | 200 | 220 | 240 | 260 | 280 | 300 | 320 | 340 | 360 |
| Inventive laminate 3 | L | T | | + | + | + | + | + | + | + | -- | -- |
| | | B | | + | - | + | + | + | + | + | + | + |
| | R | T | | - | - | + | + | + | + | + | + | + |
| | | B | | - | - | + | + | + | + | + | + | + |
| Comparative laminate 3 | L | T | - | - | + | + | + | + | + | -- | -- | -- |
| | | B | - | - | + | + | + | + | + | + | + | + |
| | R | T | - | - | + | + | + | + | + | + | -- | -- |
| | | B | - | - | - | + | + | + | -- | | | |

| | | | | | | | | | | | | |
|---|---|---|---|---|---|---|---|---|---|---|---|---|
| - : Cold + : Good seal -- : Burnt marks | | | | | | | | | | | | |

### Background Example 4

### Successful background laminate 4:

A laminated material was produced having the following principal structure:
//LDPE 12 g/m²/ paperboard 260 mN / LDPE 25 g/m² / paper substrate / PVOH / metallization / EAA adhesive 6 g/m² / LDPE 13 g/m²/ biaxially oriented LLDPE film "BO-F" 17 g/m² / innermost heat sealable blend of 70 wt% mLLDPE and 30 wt% LDPE, 19 g/m² //

The biaxially oriented film BO-F was the pre-manufactured film (SealTOUGH 18XE400 manufactured by Jindal Films). The bulk layer, i.e. the paperboard, was a paperboard from Billerud AB, of 260 mN (GM) bending stiffness, as used for larger package formats, such as 1-litre packages for family consumption. The paperboard had a printable pigment coating (clay-coat) on its outer side and was laminated to the barrier coated thin paper substrate by melt extrusion lamination with an interjacent bonding layer of about 8 g/m² LDPE. The web of the laminate paperboard and barrier paper was pre-cut with one hole (for an opening) per package unit of the web, before it was further laminate to outside and inside polymer layers. The biaxially oriented LLDPE film BO-F was thus further laminated to the other, inner side of the barrier-coated paper substrate by melt extrusion lamination of a co-extrusion of a tie layer of 6 g/m² adhesive EAA polymer together with about 13 g/m² of a bonding layer of LDPE, to form an interjacent bonding layer portion, with the EAA adjacent to the barrier-coated surface of the paper substrate and the LDPE layer adjacent to the biaxially oriented LLDPE film BO-F. A further, innermost layer was extrusion coated onto the free, inside surface of the film BO-F, comprising a blend of about 70 wt% mLLDPE and about 30 wt % LDPE. The paperboard was extrusion coated on its opposite, outer side with about 12 g/m2 of LDPE.

The barrier coated paper was separately made by coating a thin Kraft paper of 39 g/m² surface weight, with two dispersion coating layers of PVOH with intermediate and subsequent dryings, each of about 0.75 g/m² of PVOH, thus to a 1.5 g/m² total PVOH dry gas barrier layer. The PVOH layer was subsequently vapour deposition coated by an aluminium metallization coating to an optical density (OD) of about 2.0.

### Comparative background laminate 4

A comparative laminated material was produced having the same principal structure, and laminated in the same way, as described regarding Successful background laminate 4, except that it was omitted to extrusion coat a further innermost layer. Instead, the BO-F film itself was to constitute the innermost layer of the laminated packaging material, as would be the case for a corresponding laminated material intended for a small package, such as a 200 ml portion package, and having a thinner paperboard having a lower bending stiffness.
//LDPE 12 g/m²/ paperboard 260 mN / LDPE 25 g/m² / paper substrate / PVOH / metallization / EAA adhesive 6 g/m²/ LDPE 13 g/m²/ biaxially oriented LLDPE film "BO-F" 17 g/m² //

Packages were produced from the Successful background laminate 4 and the Comparative background laminate 4 and filled with water in a Tetra Pak^{®} A3/Flex filling machine. The packages were in the format of Tetra Brik^{®} Edge with a volume of 1000 ml. This type of filling machine also works according to the tube filling concept, according to which a vertical tube is continuously forwarded, while being longitudinally heat sealed and filled with liquid food, at the same time as intermittent, transversal heat seals are formed to seal the tube below the liquid surface level. Pillow-shaped packages are thus cut off from the tube in a synchronized manner with the formed transversal seals. After the cut, the pillow-shaped packages are further folded to obtain the final package shape. Before the longitudinal sealing of the tube, opening devices are injection moulded directly onto the laminated, pre-cut opening holes, of the web of packaging material as it is forwarded through the filling machine.

The filled packages were subsequently emptied, unfolded and evaluated at the areas of the heat seals and at the areas of the inside of the laminate, which were exposed to maximal mechanical stress during the filling and forming operations. In this example, the injection moulded openings of plastics were studied regarding their attachment to the laminated packaging material and their tightness and regarding any risk for integrity issues. The injection moulded openings were of the type "Lightwing^{™} 30" and applied by the standard direct injection moulding tools included in the filling machine.

Whereas there were no perceived defects around the applied opening device onto the Successful background laminate 4, there were however defects detected around some of the openings of the Comparative background laminate 4.

Successful background laminate 4 having the extrusion-coated inside layer of a blend of mLLDPE and LDPE presented good adhesion of the plastic opening device to the inside of the package, as well as to the outside.

For the evaluation of the opening attachment on the inside of the laminated material, ink penetration was studied on the inside around the opening attachment area and between the opening plastics and the inside surface of the laminated material. Leakages towards the outside of the packaging material were also checked.

Furthermore, a bending test was performed, to test whether the attachment to the inside was strong and reliable. The results were as shown in Table 7.

**Table 7**

| Sample | Ink penetration | Comment to ink penetration | Bending stress test |
|---|---|---|---|
| Successful background laminate 4 | None | No colour from ink was seen beneath the plastics of the opening device. | No significant detachment observed. Low risk for opening becoming |
| | | Fibre tear was without coloured fibres. No leakages towards the outside. | detached from the inside. |
| Comp. background laminate 4 | Ink was occasionally seen beneath the plastics of the opening device in some packages. | Occasionally, ink also reached cellulose fibres at fibre tear of paperboard. No leakages towards the outside. | Detachment observed. Medium to high risk for opening becoming detached from inside, potentially creating an integrity issue. |

### Brief description of the test methods

### Ink penetration test

This test method is suitable as a principal test of opening devices of plastics, of the type that are injection moulded onto a laminated packaging material while it is forwarded through the filling and packaging machine. By the method it is assessed how well and securely the plastic parts are sealed to the outside and inside surfaces of the laminated packaging material. The results of the assessment indicate how good the integrity of the packaging container is around the opening device before having been opened and how robust the opening will be before and during consumer use, which in turn affects the safety of the filled food product and how long the unsold package may be stored on a retailer's shelf.

After the production of filled packages, about thirty sample packages are taken out to be tested. The sample packages are opened, emptied, unfolded and flattened for easy access around the opening device on both sides of the packaging material of the package walls. Coloured ink is applied with small brush, in a small quantity, around the opening flange on the inside of the packaging material on each sample. The coloured samples are left to dry. When the samples have dried, the packaging material around the opening device is folded outwards, i.e. away from the inside part of the opening device, on four sides of the opening device. The opening plastics on the inside is carefully peeled off from the carton laminate at one of the sides where the packaging material is folded away from the openings plastics. The remaining packaging material is visually inspected for signs of ink penetration of the coloured ink, both on and into the packaging material and in the opening device itself. If there is ink penetration, it is noted.

The sealing of the opening device to the packaging material is acceptable if there is no ink penetration into and beneath the opening device on, or into the packaging material.

The assessment criteria is thus that no ink penetration shall be visible to have penetrated under the plastics of the attached opening plastics, and in particular not to have reached any of the paperboard fibres at a fibre tear.

### Risk for opening detachment from laminate inside

The detachment risk is assessed after that mechanical stress has been applied to the packaging material at the point of attachment between the opening device and the inside surface of the laminated material, by mechanical bending at 90 degrees of the material away from the inside part of the opening neck (i.e. bending the material towards the outside of the package/ packaging material).

The detachment of the opening from the inside surface after such mechanical bending should generally be small to be deemed acceptable regarding risk for any integrity problems around the opening device (the lower the better).

In case that any detachment between the plastic of the neck and the inside laminate surface is seen, the risk associated with it is evaluated.

### Advantages from the laminated packaging materials of the invention

- In addition to the improved package integrity obtainable from the use of a heat sealable, load-bearing, pre-manufactured film in the polymer multilayer section inside of the barrier materials, the laminated packaging materials of the invention have improved heat sealing properties for more demanding package formats, at the use of less polymer materials in total.
- Moreover, larger carton packaging container formats for liquid food packaging require bigger openings which may be directly injection moulded onto the packaging material in the filling machine. Such opening devices in turn require good compatibility with the laminated packaging material, in particular on the inside of the packages. The laminated packaging material of the invention has very good such compatibility and is well sealable to the applied opening devices.
- At the same time, the added polymer that is required for the innermost layer of the present invention, will not alter the openability of the packages, as is it applied by means of convention extrusion coating.
- The laminated packaging materials of the present invention are more sustainable to the environment and the climate by requiring less carbon dioxide in manufacturing processes, and by simplifying recycling processes, by the absence of a thick aluminium foil in the laminated packaging material. It may also increase recyclability in that it is possible to use only one type of polymer (polyolefin/polyethylene) in addition to the cellulose fibres. There will thus be a minimal amount of reject comprising other materials than polyethylene and cellulose. Simplified recycling processes are a pre-requisite for a sustainable, circular economy of materials and the laminated packaging material of the invention enables such a goal.
- The addition of polyethylene polymers on the inner side for the innermost layer of the packaging material can be balanced by removing polyethylene-based polymers in the bonding layers interior in the laminate, in particular regarding the first interjacent bonding layer which is bonding and laminating a barrier-coated substrate to the bulk layer, without making any sacrifices on the performance of the laminated packaging material.
- A flexible and equalizing base coating, being a flexible or elastic base coating filled with inorganic particles or fillers, ensures that mechanical strain and potential stress forces upon folding are levelled out within the plane of the layered materials of the laminate, thanks to its flexibility and ability to stretch and adapt, thus preventing the gas barrier coatings from cracking.
- Furthermore, it has been seen that the base coating allows the migration of water vapour molecules through the z-direction of the laminate structure, such that no moisture is trapped within the moisture-sensitive oxygen barrier layer, such as of PVOH, EVOH, starch or other polysaccharide compounds.
- Thanks to a smooth and dense surface structure of the applied base coating, there will be good film formation of the subsequently applied gas barrier coating(s). The initial oxygen barrier properties provided by such gas barrier coatings, i.e. the oxygen barrier as measured by OTR test methods on flat samples of laminated packaging materials comprising the barrier-coated bulk layer, may thus be improved thanks to the ability of the flexible and equalizing base coating with the inorganic particles, of being smoothened and densified, to provide a substrate surface with low surface porosity and low surface roughness, thus enabling efficient gas barrier coatings, although such gas barrier coatings are only thinly applied and despite being inherently sensitive to mechanical abuse.
- Furthermore, any sudden bursts of steam or humid air, due to exposure to heat treatment, heat sealing or the like, may be confined to the fibrous part of the bulk layer and will thus not erupt through the flexible and equalizing base coating. In this way, the flexible and equalizing base coating ensures that so-called "blistering" will not destroy the further polymer layers on the inside of the flexible and equalizingbase coating. Such further gas barrier and polymer inside layers and coatings must remain intact to ensure the integrity and food safety of a packaging container, formed and heat sealed from the laminated packaging material.
- The gas barrier properties of the first gas barrier coating will be sustained and kept intact by the interaction with the metallized film laminated on the inside of the barrier-coated paperboard, as well as with the flexible and equalizing base coating. The metallized film contributes with barrier properties towards migrating water vapour from the packaged liquid food product and in this way keeps the first gas barrier layer or coating dry from the inside. The base coating is permeable to slow migration of water vapour at low amounts, thus helping any water vapour around the first gas barrier coating to remain at equilibrium, also in close connection to the paperboard bulk layer.
- The first, outermost protective layer is liquid tight or sufficiently moisture resitant, such that moisture and dirt is not able to easily enter the outer side of the bulk layer or a print substrate paper layer.
- The metallized film contributes with barrier properties towards light from the outside of a packaging container made from the laminated packaging material. This is especially advantageous and desirable in the long-term aseptic packaging of light-sensitive food products, such as milk.
- The fibre content of the laminated packaging material may be increased by replacing the printable coating , i.e. clay coat, on the outer side of the paperboard with a print substrate paper by a simple wet lamination operation using only low amount of adhesive in between. In this way, a conventional liquid paperboard, only clay-coated on one side, may still be used, however turned inside out, to provide a yet printable laminated structure.
- For future increased use of recycled fibre content in the bulk layer, a migration barrier coating towards mineral-oil-containing (MOC) residual substances may be pre-applied (dispersion coated and dried) onto the separate, outside print-substrate paper, to encapsulate the bulk layer between it and the barrier coatings on the inside of the bulk layer. A metallized coating, as well as a base coating and a gas barrier dispersion coating, inherently can provide also such MOC migration barrier properties.

Finally, by significantly reducing the amount of aluminium used, and by reducing also further polymer content and barrier materials in the laminated structure to a balanced minimum, a resource-lean material, well adapted to recycling processes of the used beverage carton recycling streams, is provided. Thanks to the aqueous barrier and base coating compositions, the inside polymer layers will be readily separable from the paperboard, and the fibre content of the structure will be comparatively high. The fibre fraction as well as the polymer fraction will also be a more pure polyolefin fraction, such as a purer polyethylene fraction, as the gas barrier polymers and the base coating compositions will be dissolved in the process.

As a final remark, the invention is not limited by the embodiments shown and described above, but may be varied within the scope of the claims.

## Claims

1. Laminated packaging material (10; 20), for aseptic packaging of liquid food products, such as milk or dairy products, comprising
as layers of a layer sequence, as viewed from outside to inside of a packaging container formed from the laminated packaging material,
a first outermost, protective material layer (12; 22),
a bulk layer (11; 21) of paper, paperboard or other cellulose-based material,
a flexible and equalizing base coating (15; 25), comprising from 25 to 96 weight-% of inorganic particles and from 4 to 75 wt-% of a polymer binder, per dry weight, applied directly on and adjacent to a first, inner side of the bulk layer by means of aqueous dispersion coating,
a first gas barrier coating (14; 24), applied onto the flexible and equalizing base coating (15; 25), by means of dispersion or solution coating of an aqueous oxygen barrier composition and subsequent drying by hot air to evaporate the water from the gas barrier coating,
at least one interjacent bonding layer (17; 27) comprising at least one bonding polymer,
a metallized polymer film (16; 26), which comprises a vapour deposited metallization coating (16a) on a polymer film substrate (16b), the metallized polymer film (16; 26) being laminated to the inner side of the thus barrier-coated bulk layer by means of the at least one interjacent bonding layer (17; 27), wherein the polymer film substrate (16b; 26b) is, or comprises, a first innermost liquid tight, heat sealable material layer of the laminated packaging material, and optionally
a further, second, innermost liquid tight, heat sealable material layer or multilayer portion (13; 23) applied by melt (co-) extrusion coating onto the inner side of the metallized polymer film (16;26) and comprising one or more (co-)polymer(s) based on polyethylene, such as selected from LDPE, mLLDPE and LLDPE and any blends of two or more thereof, wherein
the polymer film substrate (16b) of the metallized polymer film (16) is a pre-manufactured, polyethylene film being a cast and biaxially oriented film comprising from 60 to 100 % of linear-low density polyethylene (LLDPE), preferably 80 to 100 % LLDPE, more preferably 90 to 100 % LLDPE, the pre-manufactured polyethylene film further having the properties of
- a total thickness from 15 to 25 µm,
- an Elastic Modulus of at least 400 MPa in the MD, and of at least 500 MPa in the CD, as measured by ASTM D 882-02 (2018) with an initial strain rate of 0.1 mm/(mm*min),
- a tensile strength above 40 MPa, preferably above 50 MPa in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 deg C as determined by ASTM F1921 (2018) at 2N,
- a maximum hot-tack force above 7 N, as measured by ASTM F1921 (2018), and
- a puncture resistance of 10 N or higher, as measured according to ASTM F1306-16 (2016) at a crosshead speed of 500 mm/min.

2. Laminated packaging material (10; 20), as claimed in claim 1, wherein the flexible and equalizing base coating (15; 25) comprises from 30 to 96 weight-%, such as from 40 to 96 weight-%, such as from 50 to 96 weight-%, such as from 55 to 96 weight-%, such as from 60 to 96 weight-%, such as from 65 to 96 weight-%, such as from 70 to 96 weight-%, of the inorganic particles and from 4 to 70 weight-%, such as from 4 to 60 weight-%, such as from 4 to 50 weight-% such as from 4 to 45 weight-%, such as from 4 to 40 weight-%, such as from 4 to 35 weight-%, such as from 4 to 30 weight-%, of a polymer binder and further additives, based on dry weight.

3. Laminated packaging material (10; 20), as claimed in any one of the preceding claims, wherein the flexible and equilizing base coating (15: 25) is applied by means of aqueous dispersion coating at an amount of from 5 to 25 g/m², such as from 7 to 22 g/m², such as from 7 to 20 g/m², such as from 7 to 19 g/m², such as from 10 to 20 g/m², such as from 10 to 19 g/m², such as from 10 to 15 g/m², dry weight.

4. Laminated packaging material (10; 20), as claimed in any one of the preceding claims, wherein the polymer binder of the flexible and equalizing base coating (15; 25) is an aqueous emulsion binder, such as selected from the group consisting of aqueous emulsions of acrylic or methacrylic homo- or co-polymers, such as styrene-acrylate latex, vinyl acrylic copolymer latex or vinyl acetate acrylate copolymer latex, and of styrene-butadiene copolymers, such as styrene-butadiene latex, and of biobased emulsion binders, such as modified starch latex, and of vinyl alcohol polymers, such as polyvinyl alcohol, PVOH, or ethylene vinyl alcohol, EVOH, and of other modified starches or starch derivatives.

5. Laminated packaging material (10; 20), as claimed in any one of the preceding claims, wherein the free, dried but uncoated surface of the flexible and water vapour equalizing base coating (15; 25), was measured to have a surface roughness below 150 ml/min Bendtsen, such as below 100 ml/min Bendtsen, such as below 80 ml/min Bendtsen, such as below 50 ml/min Bendtsen.

6. Laminated packaging material (10; 20), as claimed in any one of the preceding claims, wherein the aqueous oxygen barrier composition of the first gas barrier coating (14; 24) comprises a polymer selected from the group consisting of vinyl alcohol polymers and copolymers, such as polyvinyl alcohol, PVOH, and ethylene vinyl alcohol, EVOH, starch, starch derivatives, xylan, xylan derivatives, nanofibrillar/ microfibrillar cellulose, NFC/ MFC, nanocrystalline cellulose, NCC, and blends of two or more thereof.

7. Laminated packaging material (10; 20), as claimed in any one of the preceding claims, wherein the aqueous oxygen barrier composition of the first gas barrier coating (14; 24) comprises a polymer selected from the group consisting of starch and vinyl alcohol polymers and copolymers, such as from the group consisting of polyvinyl alcohol, PVOH, ethylene vinyl alcohol, EVOH and starch.

8. Laminated packaging material (10; 20), as claimed in any one of the preceding claims, wherein the first gas barrier coating (14; 24) is applied by means of aqueous dispersion or solution coating at a grammage from 0.5 to 4 g/m², such as from 0.5 to 3 g/m², such as from 0.5 to 2 g/m² dry weight.

9. Laminated packaging material (20), as claimed in any one of the preceding claims, wherein the bulk layer is a conventional liquid paperboard (21) having a flexible and equalizing base coating (25) on its inner side, and wherein a print-substrate paper (29a) is laminated to the opposite, outer, not base-coated side of the bulk layer (21), for the printing of a décorative pattern (29b), and further coating or lamination of the first, outermost protective material layer (22).

10. Laminated packaging material (20) according to claim 9, wherein the outer side of the bulk layer (21) is bonded to the print-substrate paper (29a) by an intermediate bonding layer comprising a polymer binder selected from the group consisting of acrylic polymers and copolymers, starch, cellulose and polysaccharide derivatives, polymers and copolymers of vinyl acetate and/or vinyl alcohol.

11. Laminated packaging material as claimed in any one of the preceding claims, wherein the LLDPE of the pre-manufactured polyethylene film (16; 26) has a melt flow ratio/melt flow index (MFR/ MFI) of from 2 to 5 g/10min at 2.16 kg, 190 °C, as measured according to ASTM D1238 or ISO 1133.

12. Laminated packaging material as claimed in any one of the preceding claims, wherein the pre-manufactured polyethylene film (16; 26) comprises from 60 to 100 % of m-LLDPE, preferably 80 to 100 % m-LLDPE, more preferably 90 to 100 % m-LLDPE.

13. Laminated packaging material as claimed in any one of the preceding claims, wherein the pre-manufactured polyethylene film (16; 26) has a core layer comprising more than 60 weight-% of m-LLDPE, a first "skin" layer on one side of the core layer, also comprising LLDPE, preferably m-LLDPE, and further adapted for heat sealing of the film than the polyethylene of the core layer, and optionally the pre-manufactured polyethylene film has a second skin layer on the other side of the core layer.

14. Laminated packaging material as claimed in any one of the preceding claims, wherein the pre-manufactured polyethylene film (16; 26) has a total thickness from 16 to 23 µm, such as from 16 to 20 µm.

15. Laminated packaging material as claimed in any one of the preceding claims, wherein the pre-manufactured polyethylene film (16; 26) has a seal initiation temperature, SIT, from 80 to 95 deg C, such as from 80 to 90 deg C, as determined by ASTM F1921 (2018) at 2N.

16. Laminated packaging material as claimed in any one of the preceding claims, wherein the pre-manufactured polyethylene film (16; 26) has a maximum hot-tack force above 8 N, as measured by ASTM F1921 (2018).

17. Laminated packaging material as claimed in any one of the preceding claims, wherein the pre-manufactured polyethylene film (16; 26) has a puncture resistance of 10 N or higher, as measured according to ASTM F1306-16 (2016) at a crosshead speed of 500 mm/min, and exhibits a lower elongation at puncture (i.e. at maximum load) than 10 mm.

18. Packaging container (50a; 50b; 50c; 50d) comprising the laminated packaging material (10; 20) as defined in any one of claims 1-17.

19. Method of manufacturing a laminated packaging material (10; 20) as claimed in any one of claims 1-18, which comprises
a first step of providing a bulk layer of a carton or paperboard as a moving web (31a) in a roll-to-roll system, the bulk layer having a flexible and equalizing base coating (15; 25), which has been applied by means of dispersion coating (32a) a composition comprising from 25 to 96 weight-% of inorganic particles and from 4 to 75 wt-% of a polymer binder, per dry weight, subsequent drying (33a) by forced evaporation and smoothening, such as by calendering (not shown), the surface of the base-coated bulk layer 34a,
a second step of dispersion coating (32a') an aqueous second dispersion or solution of a first gas barrier coating composition, onto the moving, smoothened base-coated bulk layer (31a'), and subsequently drying (33a') the applied first gas barrier coating (14; 24) by forced heat evaporation,
optionally repeating the second step, and
a third step of laminating a web of the metallized polymer film (34b; 16; 26) to the inner, barrier-coated side of the web of the bulk layer (31b; 11: 21) obtained from the second step (34a'), by means of melt extruding (32b) an interjacent thermoplastic polymer layer (33b; 17; 27) between the two webs and pressing all three layers together in a laminating roller nip (35b), and optionally,
(co-)extrusion coating (34c) a further, second innermost, liquid tight, heat sealable material layer or multilayer portion (13; 23), comprising a thermoplastic polymer (34d), on the inner side of the metallized polymer film (16:26).

20. Method as claimed in claim 19, wherein the flexible and equalizing base coating composition (12) is an aqueous composition comprising from 10 to 20 weight-% of a polymer binder and from 80 to 90 weight-% of inorganic particles, dry weight.

21. Method as claimed in any one of claims 19-20, wherein the free, uncoated surface of the flexible and a equalizing base coating (12) on the base-coated fibrous cellulose substrate obtained from the third step, has a surface roughness below 3 µm, such as below 2.5 µm, such as 2 µm or lower, such as 1.5 µm or lower, such as 1.2 µm or lower, such as 1.0 µm or lower, as measured according to ISO 8791-4 (PPS).
